(19) Europäisches Patentamt
European Patent Office
Office européen des brevets

(11) **EP 3 860 123 B1**

(12) **EUROPEAN PATENT SPECIFICATION**

(45) Date of publication and mention
of the grant of the patent:
**27.12.2023 Bulletin 2023/52**

(21) Application number: **19883103.4**

(22) Date of filing: **08.11.2019**

(51) International Patent Classification (IPC):
**H04N 19/513** *(2014.01)*    **H04N 19/52** *(2014.01)*
**H04N 19/70** *(2014.01)*

(52) Cooperative Patent Classification (CPC):
**H04N 19/52; H04N 19/513; H04N 19/70**

(86) International application number:
**PCT/KR2019/015198**

(87) International publication number:
**WO 2020/096426 (14.05.2020 Gazette 2020/20)**

(54) **METHOD FOR ENCODING/DECODING IMAGE SIGNAL, AND DEVICE FOR SAME**

VERFAHREN FÜR DIE KODIERUNG/DEKODIERUNG EINES BILDSIGNALS, UND ZUGEHÖRIGE
VORRICHTUNG

PROCÉDÉ POUR LE CODAGE/DÉCODAGE D'UN SIGNAL D'IMAGE, ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2018  KR 20180136262**
            **21.12.2018  KR 20180167979**

(43) Date of publication of application:
**04.08.2021  Bulletin 2021/31**

(60) Divisional application:
**23204211.9 / 4 287 622**

(73) Proprietor: **GUANGDONG OPPO MOBILE
TELECOMMUNICATIONS
CORP., LTD.
Dongguan Guangdong 523860 (CN)**

(72) Inventor: **LEE, Bae Keun
Seongnam-si, Gyeonggi-do 13490 (KR)**

(74) Representative: **Taor, Simon Edward William
Venner Shipley LLP
200 Aldersgate
London EC1A 4HD (GB)**

(56) References cited:
**WO-A1-2018/175911      KR-A- 20180 007 345
KR-A- 20180 107 687      US-A1- 2011 194 609
US-A1- 2013 114 717      US-A1- 2013 294 513**

**US-A1- 2018 084 260**

• XU CHEN ET AL: "CE4: Enhanced Merge
Mode(Test 4.2.15)", JOINT VIDEO EXPERTS
TEAM (JVET) OF ITU-T SG 16 WP 3 AND ISO/IEC
JTC 1/SC 29/WG 11 11TH MEETING, , no.
JVET-K0198 18 July 2018 (2018-07-18), pages 1-8,
XP030199235, Retrieved from the Internet:
URL:http://phenix.int-evry.fr/jvet/doc_end
_user/documents/11_Ljubljana/wg11/JVET-K01
98-v2.zip JVET_K0198.docx
• LI (TENCENT) G ET AL: "CE4-related: affine
merge mode with prediction offsets", 12. JVET
MEETING; 20181003 - 20181012; MACAO; (THE
JOINT VIDEO EXPLORATION TEAM OF ISO/IEC
JTC1/SC29/WG11 AND ITU-T SG.16 ), , no.
JVET-L0320 7 October 2018 (2018-10-07),
XP030195210, Retrieved from the Internet:
URL:http://phenix.int-evry.fr/jvet/doc_end
_user/documents/12_Macao/wg11/JVET-L0320-
v 3.zip JVET-L0320-r2.docx [retrieved on
2018-10-07]

- YANG (HUAWEI) H ET AL: "CE4: Summary report on inter prediction and motion vector coding", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0024 4 October 2018 (2018-10-04), XP030194589, Retrieved from the Internet: URL:http://phenix.int-evry.fr/jvet/doc_end _user/documents/12_Macao/wg11/JVET-L0024-v 2.zip JVET-L0024-v2.docx [retrieved on 2018-10-04]
- OUDIN S ET AL: "Block merging for quadtree-based video coding", MULTIMEDIA AND EXPO (ICME), 2011 IEEE INTERNATIONAL CONFERENCE ON, IEEE, 11 July 2011 (2011-07-11), pages 1-6, XP031964689, DOI: 10.1109/ICME.2011.6012010 ISBN: 978-1-61284-348-3
- XU CHEN: "CE 4: Merge Offset Extension (Test 4.4.8)", JVET-L0176, Joint Video Experts Team (JVET) of ITU-T SG 16 WP 3 and ISO/IEC JTC 1/SC 29/WG 11 12th Meeting: Macao, CN, 12 October 2018 (2018-10-12), pages 1-6 1-4, XP030190863,
- JEONG S ET AL: "CE4 Ultimate motion vector expression (Test 4.5.4)", THE JOINT VIDEO EXPLORATION TEAM OF ISO/IEC JTC1/SC29/WG11 AND ITU-T SG.16, , no. JVET-L0054 12 October 2018 (2018-10-12), pages 1-8, XP030194606, Retrieved from the Internet: URL:http://phenix.int-evry.fr/jvet/doc_end _user/documents/12_Macao/wg11/JVET-L0054-v 2.zip JVET-L0054_WD.docx
- ALSHIN A ET AL: "Description of SDR, HDR and 360° video coding technology proposal by Samsung, Huawei, GoPro, and HiSilicon - mobile application scenario", 10. JVET MEETING; 20180410 - 20180420; SAN DIEGO; (THE JOINT VIDEO EXPLORATION TEAM OF ISO/IEC JTC1/SC29/WG11 AND ITU-T SG.16 ), , no. JVET-J0024 14 April 2018 (2018-04-14), XP030248219, Retrieved from the Internet: URL:http://phenix.int-evry.fr/jvet/doc_end _user/documents/10_San%20Diego/wg11/JVET-J 0024-v4.zip JVET-J0024_v3.docx [retrieved on 2018-04-14]

**Description**

## TECHNICAL FIELD

The present disclosure relates to a video encoding and decoding method, a video encoder, a video decoder, a video encoding apparatus, a video decoding apparatus, and a computer-readable storage medium.

## BACKGROUND

As display panels are getting bigger and bigger, video services of further higher quality are required more and more. The biggest problem of high-definition video services is significant increase in data volume, and to solve this problem, studies for improving the video compression rate are actively conducted. As a representative example, the Motion Picture Experts Group (MPEG) and the Video Coding Experts Group (VCEG) under the International Telecommunication Union-Telecommunication (ITU-T) have formed the Joint Collaborative Team on Video Coding (JCT-VC) in 2009. The JCT-VC has proposed High Efficiency Video Coding (HEVC), which is a video compression standard having a compression performance about twice as high as the compression performance of H.264/AVC, and it is approved as a standard on January 25, 2013. With rapid advancement in the high-definition video services, performance of the HEVC gradually reveals its limitations. Xu Chen et al.: "CE4: Enhanced Merge Mode (Test 4.2.15)", Joint Video Experts Team (JVET) of ITU-T SG 16 WP 3 and ISO/IEC JTC 1/SC 29/WG 11 11th Meeting, no. JVET-K0198, 18 July 2018, pages 1-8 presents an enhanced merge mode based on VTM-1.0 and BMS-1.0. Firstly, the extended spatial merge candidates are added into the merge candidates list, followed by more MV offsets added to the first merge candidate, then the combined average merge candidates are generated to replace the original combined bipredictive candidates. Li (Tencent) G. et al.: "CE4-related: affine merge mode with prediction offsets", 12. JVET Meeting; 20181003-20181012; Macao; (The Joint Video Experts Team of ISO/IEC JTC1/SC29/WG11 and ITU-T SG 16 WP 3), no.JVET-L0320, 7 October 2018 proposes a method of affine merge mode with prediction offsets. US 2011/194609 A1 discloses a method of selecting predicted motion vector candidates. US 2013/114717 A1 discloses a method of generating additional merge candidates. Yang H. et al.: "CE4: Summary report on inter prediction and motion vector coding", 12. JVET Meeting; 20181003-20181012; Macao; (The Joint Video Exploration Team of ISU/IEC JTC1/SC29/WG11 and ITU-T SG.16), no. JVET-L0024, 4 October 2018 provides a summary report of Core Experiment 4 on inter prediction and motion vector coding. Oudin S. et al.: "Block merging for quadtree-based video coding", Multimedia and Expo (ICME), 2011 IEEE International Conference on, IEEE, 11 July 2011, pages 1-6 discloses a simple but efficient block merging algorithm that aims at removing those redundancies by using only a single parameter set for a whole motion-compensated region of contiguous blocks. Jeong S. et al.: "CE4 Ultimate motion vector expression (Test 4.5.4)", The Joint Video Exploration Team of ISO/IEC JTC1/SC29/WG11 and ITU-T SG.16, no. JVET-L0054, 12 October 2018, pages 1-8 provides the proposed text of VVC Working Draft regarding CE4 Ultimate motion vector expression. Alshin et al.: "Description of SDR, HDR and 360° video coding technology proposal by Samsung, Huawei, GoPro, and HiSilicon - mobile application scenario", 10. JVET Meeting; 20180410-20180420; San Diego; (The Joint Video Exploration Team of IS/IEC JTC1/SC29/WG11 and ITU-T SG.16), no. JVET-J0024, 14 April 2018 has the goal to provide a video compression technology which has significantly higher compression capability than the state-of-the-art HEVC standard for all the three categories while maintaining complexity (mostly power consumption) acceptable for mobile platform applications.

## SUMMARY

The present disclosure is specified by independent claims. Further embodiments are specified in dependent claims.

A video decoding method according to the present disclosure includes the steps of: determining whether a merge motion difference encoding method is applied to a current block; generating a merge candidate list for the current block; specifying a merge candidate for the current block based on the merge candidate list; and deriving a motion vector for the current block based on the merge candidate. At this point, when the merge motion difference encoding method is applied to the current block, the motion vector of the current block is derived by adding an offset vector to a motion vector of the merge candidate, when the maximum number of merge candidates that the merge candidate list may include is plural, the merge candidate of the current block is selected based on index information decoded from a bitstream indicating any one among the merge candidates, and when the maximum number is 1, the merge candidate is determined without decoding the index information.

A video encoding method according to the present disclosure includes the steps of: determining whether a merge motion difference coding method is applied to a current block; generating a merge candidate list for the current block; specifying a merge candidate for the current block based on the merge candidate list; and deriving a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, index information indicating the merge candidate of the current block among the merge candidates is encoded, and when the maximum number is 1, encoding of the index information is omitted.

A video decoder according to the present disclosure includes at least one processor and a memory storing computer programs which, when executed by the at least one processor, cause the at least one processor to: determine whether a merge motion difference coding method is applied to a current block; generate a merge candidate list for the current block; specify a merge candidate for the current block based on the merge candidate list; and derive a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, the merge candidate of the current block is selected based on index information decoded from a bitstream indicating any one among the merge candidates, and when the maximum number is 1, the merge candidate is determined without decoding the index information.

A video encoder according to the present disclosure includes at least one processor and a memory storing computer programs which, when executed by the at least one processor, cause the at least one processor to: determine whether a merge motion difference coding method is applied to a current block; generate a merge candidate list for the current block; specify a merge candidate for the current block based on the merge candidate list; and derive a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, index information indicating the merge candidate of the current block among the merge candidates is encoded, and when the maximum number is 1, encoding of the index information is omitted.

A video decoding apparatus according to the present disclosure includes an inter prediction part for determining whether a merge motion difference coding method is applied to a current block, generating a merge candidate list for the current block, specifying a merge candidate for the current block based on the merge candidate list, and deriving a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, the merge candidate of the current block is selected based on index information decoded from a bitstream indicating any one among the merge candidates, and when the maximum number is 1, the merge candidate is determined without decoding the index information.

A video encoding apparatus according to the present disclosure includes an inter prediction part for determining whether a merge motion difference coding method is applied to a current block, generating a merge candidate list for the current block, specifying a merge candidate for the current block based on the merge candidate list, and deriving a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, index information indicating the merge candidate of the current block among the merge candidates is encoded, and when the maximum number is 1, encoding of the index information is omitted.

A computer-readable storage medium according to the present disclosure incudes instructions which, when executed by at least one processor, cause the at least one processor to perform the video decoding method or the video encoding method.

## BRIEF DESCRIPTION OF THE DRAWINGS

FIG. 1 is a block diagram showing a video encoder according to an embodiment of the present disclosure.
FIG. 2 is a block diagram showing a video decoder according to an embodiment of the present disclosure.
FIG. 3 is a view showing a basic coding tree unit according to an embodiment of the present disclosure.
FIG. 4 is a view showing various partitioning types of a coding block.
FIG. 5 is a view showing a partitioning pattern of a coding tree unit.
FIG. 6 is a view showing the shapes of data basic units.
FIGS. 7 and 8 are views showing examples of partitioning a coding block into a plurality of subblocks.
FIG. 9 is a flowchart illustrating an inter prediction method according to an embodiment of the present disclosure.
FIG. 10 is a view showing nonlinear motions of an object.
FIG. 11 is a flowchart illustrating an inter prediction method based on an affine motion according to an embodiment of the present disclosure.

FIG. 12 is a view showing an example of affine seed vectors of each affine motion model.

FIG. 13 is a view showing an example of affine vectors of subblocks in a 4-parameter motion model.

FIG. 14 is a flowchart illustrating a process of deriving motion information of a current block using a merge mode.

FIG. 15 is a view showing an example of candidate blocks used for deriving a merge candidate.

FIG. 16 is a view showing positions of reference samples.

FIG. 17 is a view showing an example of candidate blocks used for deriving a merge candidate.

FIG. 18 is a view showing an example in which the position of a reference sample is changed.

FIG. 19 is a view showing an example in which the position of a reference sample is changed.

FIG. 20 is a flowchart illustrating a process of updating an inter-region motion information list.

FIG. 21 is a view showing an embodiment of updating an inter-region merge candidate list.

FIG. 22 is a view showing an example in which an index of a previously stored inter-region merge candidate is updated.

FIG. 23 is a view showing the position of a representative subblock.

FIG. 24 is a view showing an example in which an inter-region motion information list is generated for each inter prediction mode.

FIG. 25 is a view showing an example in which an inter-region merge candidate included in a long-term motion information list is added to a merge candidate list.

FIG. 26 is a view showing an example in which a redundancy check is performed only on some of merge candidates.

FIG. 27 is a view showing an example in which a redundancy check is omitted for a specific merge candidate.

FIG. 28 is a view showing an offset vector according to values of distance_idx indicating a magnitude of an offset vector and direction_idx indicating a direction of the offset vector.

FIG. 29 is a view showing an offset vector according to values of distance_idx indicating a magnitude of an offset vector and direction_idx indicating a direction of the offset vector.

FIG. 30 is a view showing partitioning patterns of a coding block when a triangular partitioning technique is applied.

FIG. 31 is a view showing an example in which offset vectors of each of subunits are set differently.

FIG. 32 is a view showing motion vector candidates that a refine merge candidate may take.

FIG. 33 is a view showing the configuration of a merge refinement offset list.

FIGS. 34 and 35 are views showing offset vectors specified by merge offset candidates.

FIG. 36 is a view showing candidate blocks used for deriving motion vector prediction candidates.

FIG. 37 is a view showing motion vector candidates that may be set as a refine motion vector prediction candidate.

FIG. 38 is a view showing the configuration of a prediction vector refinement offset list.

## DETAILED DESCRIPTION

Hereafter, an embodiment of the present disclosure will be described in detail with reference to the accompanying drawings.

According to the present disclosure, a video decoding method includes: determining whether a merge motion difference coding method is applied to a current block; generating a merge candidate list for the current block; specifying a merge candidate for the current block based on the merge candidate list; and deriving a motion vector for the current block based on the merge candidate. At this point, when the is applied to the current block, the motion vector of the current block is derived by adding an offset vector to a motion vector of the merge candidate, when the maximum number of merge candidates that the merge candidate list may include is plural, the merge candidate of the current block is selected based on index information decoded from a bitstream indicating any one among the merge candidates, and when the maximum number is 1, the merge candidate is determined without decoding the index information.

In an embodiment, a magnitude of the offset vector is determined based on first index information specifying one among motion magnitude candidates.

In an embodiment, at least one among a maximum value and a minimum value of the motion magnitude candidates is set differently according to a value of a flag indicating numerical values of the motion magnitude candidates.

In an embodiment, the flag is signaled at a picture level.

In an embodiment, at least one among a maximum value and a minimum value of the motion magnitude candidates is set differently according to motion vector precision for the current block.

In an embodiment, the magnitude of the offset vector is obtained by applying a shift operation to a value indicated by the motion magnitude candidate specified by the first index information.

In an embodiment, a direction of the offset vector is determined based on second index information specifying one among vector direction candidates.

According to the present disclosure, a video encoding method includes: determining whether a merge motion difference coding method is applied to a current block; generating a merge candidate list for the current block; specifying a merge candidate for the current block based on the merge candidate list; and deriving a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, index information indicating the merge candidate of the current block among the merge candidates is encoded, and when the maximum number is 1, encoding of the index information is omitted.

In an embodiment, the video encoding method further includes encoding first index information for specifying a motion magnitude candidate indicating a magnitude of the offset vector among a plurality of motion magnitude candidates.

In an embodiment, the video encoding method further includes encoding a flag indicating numerical values of the motion magnitude candidates, wherein at least one among a maximum value and a minimum value of the motion magnitude candidates is set differently according to a value of the flag.

In an embodiment, the flag is encoded at a picture level.

In an embodiment, at least one among a maximum value and a minimum value of the motion magnitude candidates is set differently according to motion vector precision for the current block.

In an embodiment, the motion magnitude candidate has a value derived by applying a shift operation to the magnitude of the offset vector.

In an embodiment, the video encoding method further includes encoding second index information for specifying a vector direction candidate indicating a direction of the offset vector among a plurality of vector direction candidates.

According to the present disclosure, a video decoder includes at least one processor and a memory storing computer programs which, when executed by the at least one processor, cause the at least one processor to: determine whether a merge motion difference coding method is applied to a current block; generate a merge candidate list for the current block; specify a merge candidate for the current block based on the merge candidate list; and derive a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, the merge candidate of the current block is selected based on index information decoded from a bitstream indicating any one among the merge candidates, and when the maximum number is 1, the merge candidate is determined without decoding the index information.

According to the present disclosure, a video encoder includes at least one processor and a memory storing computer programs which, when executed by the at least one processor, cause the at least one processor to: determine whether a merge motion difference coding method is applied to a current block; generate a merge candidate list for the current block; specify a merge candidate for the current block based on the merge candidate list; and derive a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, index information indicating the merge candidate of the current block among the merge candidates is encoded, and when the maximum number is 1, encoding of the index information is omitted.

According to the present disclosure, a video decoding apparatus includes an inter prediction part for determining whether a merge motion difference coding method is applied to a current block, generating a merge candidate list for the current block, specifying a merge candidate for the current block based on the merge candidate list, and deriving a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, the merge candidate of the current block is selected based on index information decoded from a bitstream indicating any one among the merge candidates, and when the maximum number is 1, the merge candidate is determined without decoding the index information.

According to the present disclosure, a video encoding apparatus includes an inter prediction part for determining whether a merge motion difference coding method is applied to a current block, generating a merge candidate list for the current block, specifying a merge candidate for the current block based on the merge candidate list, and deriving a motion vector for the current block based on the merge candidate. When the merge motion difference coding method is applied to the current block, the motion vector of the current block is derived by adding an offset vector to a motion vector of the merge candidate, when the maximum number of merge candidates that the merge candidate list may include is plural, index information indicating the merge candidate of the current block among the merge candidates is encoded, and when the maximum number is 1, encoding of the index information is omitted.

According to the present disclosure, a computer-readable storage medium incudes instructions which, when executed by at least one processor, cause the at least one processor to perform the video decoding method or the video encoding method.

The present disclosure may further provide a method of refining a motion vector derived from a merge candidate based on an offset vector in encoding/decoding a video signal, and an apparatus for performing the method.

The present disclosure may further provide a method of signaling an offset vector in encoding/decoding a video signal, and an apparatus for performing the method.

According to the present disclosure, inter prediction efficiency can be improved by refining a motion vector of a merge candidate based on an offset vector.

According to the present disclosure, inter prediction efficiency can be improved by adaptively determining a magnitude and a direction of an offset vector.

Encoding and decoding of a video is performed by the unit of block. For example, an encoding/decoding process such as transform, quantization, prediction, in-loop filtering, reconstruction or the like may be performed on a coding block, a transform block, or a prediction block.

Hereinafter, a block to be encoded/decoded will be referred to as a 'current block'. For example, the current block may represent a coding block, a transform block or a prediction block according to a current encoding/decoding process step.

In addition, it may be understood that the term 'unit' used in this specification indicates a basic unit for performing a specific encoding/decoding process, and the term 'block' indicates a sample array of a predetermined size. Unless otherwise stated, the 'block' and 'unit' may be used to have the same meaning. For example, in an embodiment described below, it may be understood that a coding block and a coding unit have the same meaning.

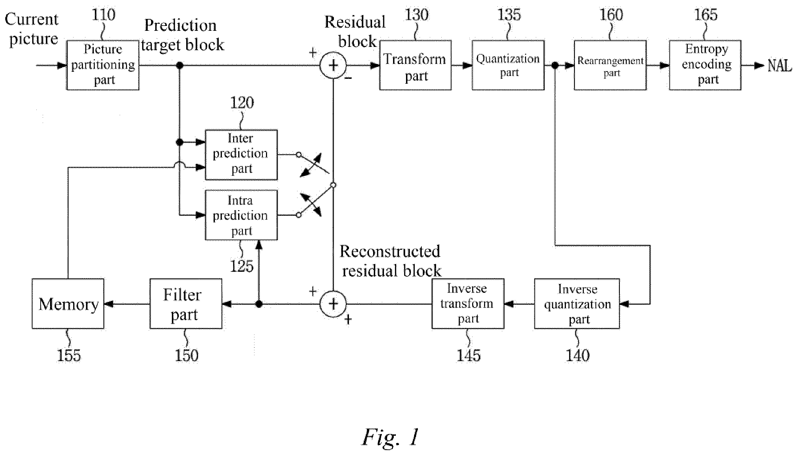

FIG. 1 is a block diagram showing a video encoder according to an embodiment of the present disclosure.

Referring to FIG. 1, a video encoding apparatus 100 may include a picture partitioning part 110, a prediction part 120 and 125, a transform part 130, a quantization part 135, a rearrangement part 160, an entropy coding part 165, an inverse quantization part 140, an inverse transform part 145, a filter part 150, and a memory 155.

Each of the components shown in FIG. 1 is independently shown to represent characteristic functions different from each other in a video encoding apparatus, and it does not mean that each component is formed by the configuration unit of separate hardware or single software. That is, each component is included to be listed as a component for convenience of explanation, and at least two of the components may be combined to form a single component, or one component may be divided into a plurality of components to perform a function. Integrated embodiments and separate embodiments of the components are also included in the scope of the present disclosure if they do not depart from the essence of the present disclosure.

In addition, some of the components are not essential components that perform essential functions in the present disclosure, but may be optional components only for improving performance. The present disclosure can be implemented by including only components essential to implement the essence of the present disclosure excluding components used for improving performance, and a structure including only the essential components excluding the optional components used for improving performance is also included in the scope of the present disclosure.

The picture partitioning part 110 may partition an input picture into at least one processing unit. At this point, the processing unit may be a prediction unit (PU), a transform unit (TU), or a coding unit (CU). The picture partitioning part 110 may partition a picture into a combination of a plurality of coding units, prediction units, and transform units, and encode a picture by selecting a combination of a coding unit, a prediction unit, and a transform unit based on a predetermined criterion (e.g., a cost function).

For example, one picture may be partitioned into a plurality of coding units. In order to partition the coding units in a picture, a recursive tree structure such as a quad tree structure may be used. A video or a coding unit partitioned into different coding units using the largest coding unit as a root may be partitioned to have as many child nodes as the number of partitioned coding units. A coding unit that is not partitioned any more according to a predetermined restriction become a leaf node. That is, when it is assumed that only square partitioning is possible for one coding unit, the one coding unit may be partitioned into up to four different coding units.

Hereinafter, in an embodiment of the present disclosure, the coding unit may be used as a meaning of a unit performing encoding or a meaning of a unit performing decoding.

The prediction unit may be one that is partitioned in a shape of at least one square, rectangle or the like of the same size within one coding unit, or it may be any one prediction unit, among the prediction units partitioned within one coding unit, that is partitioned to have a shape and/or size different from those of another prediction unit.

If the coding unit is not a smallest coding unit when a prediction unit that performs intra prediction based on the coding unit is generated, intra prediction may be performed without partitioning a picture into a plurality of prediction units $N \times N$.

The prediction part 120 and 125 may include an inter prediction part 120 that performs inter prediction and an intra prediction part 125 that performs intra prediction. It may be determined whether to use inter prediction or to perform intra prediction for a prediction unit, and determine specific information (e.g., intra prediction mode, motion vector, reference picture, etc.) according to each prediction method. At this point, a processing unit for performing prediction may be different from a processing unit for determining a prediction method and specific content. For example, a prediction method and a prediction mode may be determined in a prediction unit, and prediction may be performed in a transform unit. A residual coefficient (residual block) between the reconstructed prediction block and the original block may be input into the transform part 130. In addition, prediction mode information, motion vector information and the like used for prediction may be encoded by the entropy coding part 165 together with the residual coefficient and transferred to a decoder. When a specific encoding mode is used, an original block may be encoded as it is and transmitted to a decoder without generating a prediction block through the prediction part 120 and 125.

The inter prediction part 120 may predict a prediction unit based on information on at least one picture among pictures before or after the current picture, and in some cases, it may predict a prediction unit based on information on a partial area that has been encoded in the current picture. The inter prediction part 120 may include a reference picture interpolation part, a motion prediction part, and a motion compensation part.

The reference picture interpolation part may receive reference picture information from the memory 155 and generate pixel information of an integer number of pixels or smaller from the reference picture. In the case of a luminance pixel, a DCT-based 8-tap interpolation filter with a varying filter coefficient may be used to generate pixel information of an integer number of pixels or smaller by the unit of 1/4 pixels. In the case of a chroma signal, a DCT-based 4-tap interpolation filter with a varying filter coefficient may be used to generate pixel information of an integer number of pixels or smaller by the unit of 1/8 pixels.

The motion prediction part may perform motion prediction based on the reference picture interpolated by the reference picture interpolation part. Various methods such as a full search-based block matching algorithm (FBMA), a three-step search (TSS), and a new three-step search algorithm (NTS) may be used as a method of calculating a motion vector. The motion vector may have a motion vector value of a unit of 1/2 or 1/4 pixels based on interpolated pixels. The motion prediction part may predict a current prediction unit by varying the motion prediction mode. Various methods such as a skip mode, a merge mode, an advanced motion vector prediction (AMVP) mode, an intra-block copy mode and the like may be used as the motion prediction mode.

The intra prediction part 125 may generate a prediction unit based on the information on reference pixels in the neighborhood of the current block, which is pixel information in the current picture. When a block in the neighborhood of the current prediction unit is a block on which inter prediction has been performed and thus the reference pixel is a pixel on which inter prediction has been performed, the reference pixel included in the block on which inter prediction has been performed may be used in place of reference pixel information of a block in the neighborhood on which intra prediction has been performed. That is, when a reference pixel is unavailable, at least one reference pixel among available reference pixels may be used in place of unavailable reference pixel information.

In the intra prediction, the prediction mode may have an angular prediction mode that uses reference pixel information according to a prediction direction, and a non-angular prediction mode that does not use directional information when performing prediction. A mode for predicting luminance information may be different from a mode for predicting chroma information, and intra prediction mode information used to predict luminance information or predicted luminance signal information may be used to predict the chroma information.

If the size of the prediction unit is the same as the size of the transform unit when intra prediction is performed, the intra prediction may be performed for the prediction unit based on a pixel on the left side, a pixel on the top-left side, and a pixel on the top of the prediction unit. However, if the size of the prediction unit is different from the size of the transform unit when the intra prediction is performed, the intra prediction may be performed using a reference pixel based on the transform unit. In addition, intra prediction using N × N partitioning may be used only for the smallest coding unit.

The intra prediction method may generate a prediction block after applying an Adaptive Intra Smoothing (AIS) filter to the reference pixel according to a prediction mode. The type of the AIS filter applied to the reference pixel may vary. In order to perform the intra prediction method, the intra prediction mode of the current prediction unit may be predicted from the intra prediction mode of the prediction unit existing in the neighborhood of the current prediction unit. When a prediction mode of the current prediction unit is predicted using the mode information predicted from the neighboring prediction unit, if the intra prediction modes of the current prediction unit is the same as the prediction unit in the neighborhood, information indicating that the prediction modes of the current prediction unit is the same as the prediction unit in the neighborhood may be transmitted using predetermined flag information, and if the prediction modes of the current prediction unit and the prediction unit in the neighborhood are different from each other, prediction mode information of the current block may be encoded by performing entropy coding.

In addition, a residual block including a prediction unit that has performed prediction based on the prediction unit generated by the prediction part 120 and 125 and residual coefficient information, which is a difference value of the prediction unit with the original block, may be generated. The generated residual block may be input into the transform part 130.

The transform part 130 may transform the residual block including the original block and the residual coefficient information of the prediction unit generated through the prediction part 120 and 125 using a transform method such as Discrete Cosine Transform (DCT) or Discrete Sine Transform (DST). Here, the DCT transform core includes at least one among DCT2 and DCT8, and the DST transform core includes DST7. Whether or not to apply DCT or DST to transform the residual block may be determined based on intra prediction mode information of a prediction unit used to generate the residual block. The transform on the residual block may be skipped. A flag indicating whether or not to skip the transform on the residual block may be encoded. The transform skip may be allowed for a residual block having a size smaller than or equal to a threshold, a luma component, or a chroma component under the 4 : 4 : 4 format.

The quantization part 135 may quantize values transformed into the frequency domain by the transform part 130. Quantization coefficients may vary according to the block or the importance of a video. A value calculated by the quantization part 135 may be provided to the inverse quantization part 140 and the rearrangement part 160.

The rearrangement part 160 may rearrange coefficient values for the quantized residual coefficients.

The rearrangement part 160 may change coefficients of a two-dimensional block shape into a one-dimensional vector shape through a coefficient scanning method. For example, the rearrangement part 160 may scan DC coefficients up to high-frequency domain coefficients using a zig-zag scan method, and change the coefficients into a one-dimensional vector shape. According to the size of the transform unit and the intra prediction mode, a vertical scan of scanning the coefficients of a two-dimensional block shape in the column direction and a horizontal scan of scanning the coefficients of a two-dimensional block shape in the row direction may be used instead of the zig-zag scan. That is, according to the size of the transform unit and the intra prediction mode, a scan method that will be used may be determined among the zig-zag scan, the vertical direction scan, and the horizontal direction scan.

The entropy coding part 165 may perform entropy coding based on values calculated by the rearrangement part 160. Entropy coding may use various encoding methods such as Exponential Golomb, Context-Adaptive Variable Length Coding (CAVLC), Context-Adaptive Binary Arithmetic Coding (CABAC), and the like.

The entropy coding part 165 may encode various information such as residual coefficient information and block type information of a coding unit, prediction mode information, partitioning unit information, prediction unit information and transmission unit information, motion vector information, reference frame information, block interpolation information, and filtering information input from the rearrangement part 160 and the prediction parts 120 and 125.

The entropy coding part 165 may entropy-encode the coefficient value of a coding unit input from the rearrangement part 160.

The inverse quantization part 140 and the inverse transform part 145 inverse-quantize the values quantized by the quantization part 135 and inverse-transform the values transformed by the transform part 130. The residual coefficient generated by the inverse quantization part 140 and the inverse transform part 145 may be combined with the prediction unit predicted through a motion estimation part, a motion compensation part, and an intra prediction part included in the prediction part 120 and 125 to generate a reconstructed block.

The filter part 150 may include at least one among a deblocking filter, an offset correction unit, and an adaptive loop filter (ALF).

The deblocking filter may remove block distortion generated by the boundary between blocks in the reconstructed picture. In order to determine whether or not to perform deblocking, whether or not to apply the deblocking filter to the current block may be determined based on the pixels included in several columns or rows included in the block. A strong filter or a weak filter may be applied according to the deblocking filtering strength needed when the deblocking filter is applied to a block. In addition, when vertical direction filtering and horizontal direction filtering are performed in applying the deblocking filter, horizontal direction filtering and vertical direction filtering may be processed in parallel.

The offset correction unit may correct an offset to the original video by the unit of pixel for a picture on which the deblocking has been performed. In order to perform offset correction for a specific picture, it is possible to use a method of dividing pixels included in the video into a certain number of areas, determining an area to perform offset, and applying the offset to the area, or a method of applying an offset considering edge information of each pixel.

Adaptive Loop Filtering (ALF) may be performed based on a value obtained by comparing the reconstructed and filtered video with the original video. After dividing the pixels included in the picture into predetermined groups, one filter to be applied to a corresponding group may be determined, and filtering may be performed differently for each group. A luminance signal, which is the information related to whether or not to apply ALF, may be transmitted for each coding unit (CU), and the shape and filter coefficient of an ALF filter to be applied may vary according to each block. In addition, an ALF filter of the same type (fixed type) may be applied regardless of the characteristic of a block to be applied.

The memory 155 may store the reconstructed block or picture calculated through the filter part 150, and the reconstructed and stored block or picture may be provided to the prediction part 120 and 125 when inter prediction is performed.

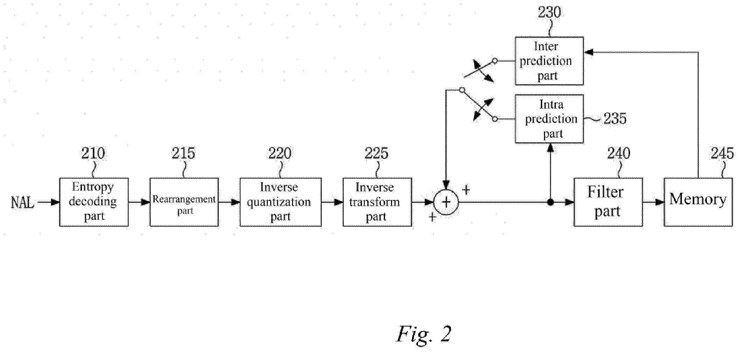

FIG. 2 is a block diagram showing a video decoder according to an embodiment of the present disclosure.

Referring to FIG. 2, a video decoder 200 may include an entropy decoding part 210, a rearrangement part 215, an inverse quantization part 220, an inverse transform part 225, a prediction part 230 and 235, a filter part 240, and a memory 245.

When a video bitstream is input from a video encoder, the input bitstream may be decoded in a procedure opposite to that of the video encoder.

The entropy decoding part 210 may perform entropy decoding in a procedure opposite to that of performing entropy coding in the entropy decoding part of the video encoder. For example, various methods corresponding to the method performed by the video encoder, such as Exponential Golomb, Context-Adaptive Variable Length Coding (CAVLC), and Context-Adaptive Binary Arithmetic Coding (CABAC), may be applied.

The entropy decoding part 210 may decode information related to intra prediction and inter prediction performed by the encoder.

The rearrangement part 215 may perform rearrangement on the bitstream entropy-decoded by the entropy decoding part 210 based on the rearrangement method performed by the encoder. The coefficients expressed in a one-dimensional vector shape may be reconstructed and rearranged as coefficients of two-dimensional block shape. The rearrangement part 215 may receive information related to coefficient scanning performed by the encoding part and perform reconstruction through a method of inverse-scanning based on the scanning order performed by the corresponding encoding part.

The inverse quantization part 220 may perform inverse quantization based on a quantization parameter provided by the encoder and a coefficient value of the rearranged block.

The inverse transform part 225 may perform inverse transform on the transform, i.e., DCT or DST, performed by the transform part on a result of the quantization performed by the video encoder, i.e., inverse DCT or inverse DST. Here, the DCT transform core may include at least one among DCT2 and DCT8, and the DST transform core may include DST7. Alternatively, when the transform is skipped in the video encoder, even the inverse transform part 225 may not perform the inverse transform. The inverse transform may be performed based on a transmission unit determined by the video encoder. The inverse transform part 225 of the video decoder may selectively perform a transform technique (e.g., DCT or DST) according to a plurality of pieces of information such as a prediction method, a size of a current block, a prediction direction and the like.

The prediction part 230 and 235 may generate a prediction block based on information related to generation of a prediction block provided by the entropy decoder 210 and information on a previously decoded block or picture provided by the memory 245.

As described above, if the size of the prediction unit and the size of the transform unit are the same when intra prediction is performed in the same manner as the operation of the video encoder, intra prediction is performed on the prediction unit based on the pixel existing on the left side, the pixel on the top-left side, and the pixel on the top of the prediction unit. However, if the size of the prediction unit and the size of the transform unit are different when intra prediction is performed, intra prediction may be performed using a reference pixel based on a transform unit. In addition, intra prediction using $N \times N$ partitioning may be used only for the smallest coding unit.

The prediction part 230 and 235 may include a prediction unit determination part, an inter prediction part, and an intra prediction part. The prediction unit determination part may receive various information such as prediction unit information input from the entropy decoding part 210, prediction mode information of the intra prediction method, information related to motion prediction of an inter prediction method, and the like. Then, the prediction unit determination part may identify the prediction unit from the current coding unit, and determine whether the prediction unit performs inter prediction or intra prediction. The inter prediction part 230 may perform inter prediction on the current prediction unit based on information included in at least one picture among pictures before or after the current picture including the current prediction unit by using information necessary for inter prediction of the current prediction unit provided by the video encoder. Alternatively, the inter prediction part 230 may perform inter prediction based on information on a partial area previously reconstructed in the current picture including the current prediction unit.

In order to perform inter prediction, it may be determined, based on the coding unit, whether the motion prediction method of the prediction unit included in a corresponding coding unit is a skip mode, a merge mode, an advanced motion vector prediction mode (AMVP mode), or an intra-block copy mode.

The intra prediction part 235 may generate a prediction block based on the information on the pixel in the current picture. When the prediction unit is a prediction unit that has performed intra prediction, the intra prediction may be performed based on intra prediction mode information of the prediction unit provided by the video encoder. The intra prediction part 235 may include an Adaptive Intra Smoothing (AIS) filter, a reference pixel interpolation part, and a DC filter. The AIS filter is a part that performs filtering on the reference pixel of the current block, and may determine whether or not to apply the filter according to the prediction mode of the current prediction unit and apply the filter. AIS filtering may be performed on the reference pixel of the current block by using the prediction mode and AIS filter information of the prediction unit provided by the video encoder. When the prediction mode of the current block is a mode that does not perform AIS filtering, the AIS filter may not be applied.

When the prediction mode of the prediction unit is a prediction unit that performs intra prediction based on a pixel value obtained by interpolating the reference pixel, the reference pixel interpolation part may generate a reference pixel of a pixel unit having an integer value or a value smaller than the integer value by interpolating the reference pixel. When the prediction mode of the current prediction unit is a prediction mode that generates a prediction block without interpolating the reference pixel, the reference pixel may not be interpolated. The DC filter may generate a prediction block through filtering when the prediction mode of the current block is the DC mode.

The reconstructed block or picture may be provided to the filter part 240. The filter part 240 may include a deblocking filter, an offset correction unit, and an ALF.

Information on whether a deblocking filter is applied to a corresponding block or picture and information on whether a strong filter or a weak filter is applied when a deblocking filter is applied may be provided by the video encoder. The deblocking filter of the video decoder may be provided with information related to the deblocking filter provided by the video encoder, and the video decoder may perform deblocking filtering on a corresponding block.

The offset correction unit may perform offset correction on the reconstructed picture based on the offset correction type and offset value information applied to the video when encoding is performed.

The ALF may be applied to a coding unit based on information on whether or not to apply the ALF and information on ALF coefficients provided by the encoder. The ALF information may be provided to be included in a specific parameter set.

The memory 245 may store the reconstructed picture or block and use it as a reference picture or a reference block and may provide the reconstructed picture to an output unit.

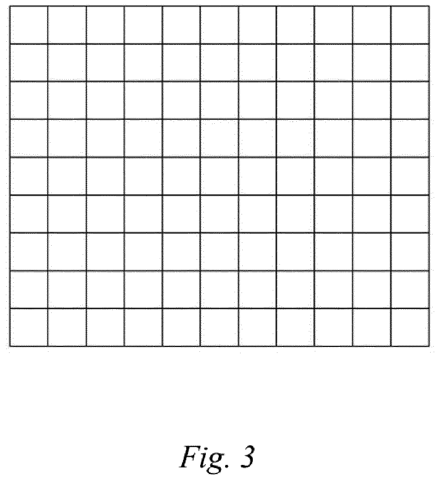

FIG. 3 is a view showing a basic coding tree unit according to an embodiment of the present disclosure.

A coding block of a maximum size may be defined as a coding tree block. A picture is partitioned into a plurality of coding tree units (CTUs). The coding tree unit is a coding unit having a maximum size and may be referred to as a Large Coding Unit (LCU). FIG. 3 shows an example in which a picture is partitioned into a plurality of coding tree units.

The size of the coding tree unit may be defined at a picture level or a sequence level. To this end, information indicating the size of the coding tree unit may be signaled through a picture parameter set or a sequence parameter set.

For example, the size of the coding tree unit for the entire picture in a sequence may be set to 128 × 128. Alternatively, at the picture level, any one among 128 × 128 and 256 × 256 may be determined as the size of the coding tree unit. For example, the size of the coding tree unit may be set to 128 × 128 in a first picture, and the size of the coding tree unit may be set to 256 × 256 in a second picture.

Coding blocks may be generated by partitioning a coding tree unit. The coding block indicates a basic unit for performing encoding/decoding. For example, prediction or transform may be performed for each coding block, or a prediction encoding mode may be determined for each coding block. Here, the prediction encoding mode indicates a method of generating a prediction picture. For example, the prediction encoding mode may include prediction within a picture (intra prediction), prediction between pictures (inter prediction), current picture referencing (CPR) or intra-block copy (IBC), or combined prediction. For the coding block, a prediction block may be generated by using at least one prediction encoding mode among the intra prediction, the inter prediction, the current picture referencing, and the combined prediction.

Information indicating the prediction encoding mode of the current block may be signaled through a bitstream. For example, the information may be a 1-bit flag indicating whether the prediction encoding mode is an intra mode or an inter mode. Only when the prediction encoding mode of the current block is determined as the inter mode, the current picture referencing or the combined prediction may be used.

The current picture referencing is for setting the current picture as a reference picture and obtaining a prediction block of the current block from an area that has already been encoded/decoded in the current picture. Here, the current picture means a picture including the current block. Information indicating whether the current picture referencing is applied to the current block may be signaled through a bitstream. For example, the information may be a 1-bit flag. When the flag is true, the prediction encoding mode of the current block may be determined as the current picture referencing, and when the flag is false, the prediction mode of the current block may be determined as inter prediction.

Alternatively, the prediction encoding mode of the current block may be determined based on a reference picture index. For example, when the reference picture index indicates the current picture, the prediction encoding mode of the current block may be determined as the current picture referencing. When the reference picture index indicates a picture other than the current picture, the prediction encoding mode of the current block may be determined as inter prediction. That is, the current picture referencing is a prediction method using information on an area in which encoding/decoding has been completed in the current picture, and inter prediction is a prediction method using information on another picture in which the encoding/decoding has been completed.

The combined prediction represents an encoding mode in which two or more among the intra prediction, the inter prediction, and the current picture referencing are combined. For example, when the combined prediction is applied, a first prediction block may be generated based on one among the intra prediction, the inter prediction, and the current picture referencing, and a second prediction block may be generated based on another. When the first prediction block and the second prediction block are generated, a final prediction block may be generated through an average operation or a weighted sum operation of the first prediction block and the second prediction block. Information indicating whether or not the combined prediction is applied may be signaled through a bitstream. The information may be a 1-bit flag.

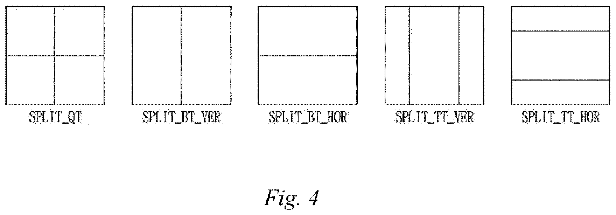

FIG. 4 is a view showing various partitioning types of a coding block.

The coding block may be partitioned into a plurality of coding blocks based on quad tree partitioning, binary tree partitioning, or ternary tree partitioning. The partitioned coding block may be partitioned again into a plurality of coding blocks based on the quad tree partitioning, the binary tree partitioning, or the ternary tree partitioning.

The quad tree partitioning refers to a partitioning technique that partitions a current block into four blocks. As a result of the quad tree partitioning, the current block may be partitioned into four squareshaped partitions (see 'SPLIT_QT' of FIG. 4 (a)).

The binary tree partitioning refers to a partitioning technique that partitions a current block into two blocks. Partitioning a current block into two blocks along the vertical direction (i.e., using a vertical line crossing the current block) may be referred to as vertical direction binary tree partitioning, and partitioning a current block into two blocks along the horizontal direction (i.e., using a horizontal line crossing the current block) may be referred to as horizontal direction binary tree partitioning. As a result of the binary tree partitioning, the current block may be partitioned into two non-square shaped partitions. 'SPLIT_BT_VER' of FIG. 4 (b) shows a result of the vertical direction binary tree partitioning, and 'SPLIT_BT_HOR' of FIG. 4 (c) shows a result of the horizontal direction binary tree partitioning.

The ternary tree partitioning refers to a partitioning technique that partitions a current block into three blocks. Partitioning a current block into three blocks along the vertical direction (i.e., using two vertical lines crossing the current block) may be referred to as vertical direction ternary tree partitioning, and partitioning a current block into three blocks along the horizontal direction (i.e., using two horizontal lines crossing the current block) may be referred to as horizontal direction ternary tree partitioning. As a result of the ternary tree partitioning, the current block may be partitioned into three non-square shaped partitions. At this point, the width/height of a partition positioned at the center of the current block may be twice as large as the width/height of the other partitions. 'SPLIT_TT_VER' of FIG. 4 (d) shows a result of the vertical direction ternary tree partitioning, and 'SPLIT_TT_HOR' of FIG. 4 (e) shows a result of the horizontal direction ternary tree partitioning.

The number of times of partitioning a coding tree unit may be defined as a partitioning depth. The maximum partitioning depth of a coding tree unit may be determined at the sequence or picture level. Accordingly, the maximum partitioning depth of a coding tree unit may be different for each sequence or picture.

Alternatively, the maximum partitioning depth for each partitioning technique may be individually determined. For example, the maximum partitioning depth allowed for the quad tree partitioning may be different from the maximum partitioning depth allowed for the binary tree partitioning and/or the ternary tree partitioning.

The encoder may signal information indicating at least one among the partitioning type and the partitioning depth of the current block through a bitstream. The decoder may determine the partitioning type and the partitioning depth of a coding tree unit based on the information parsed from the bitstream.

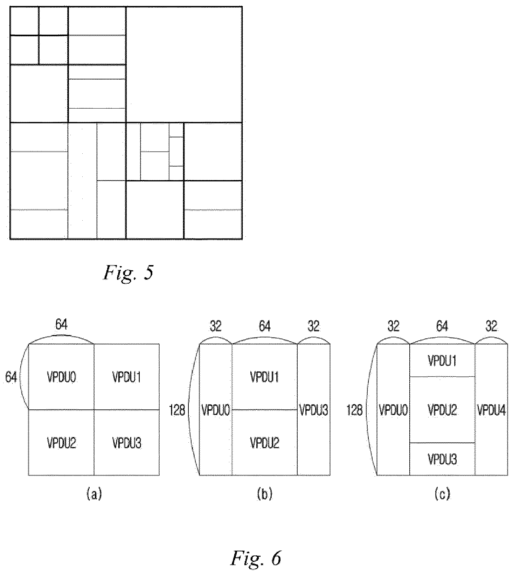

FIG. 5 is a view showing a partitioning pattern of a coding tree unit.

Partitioning a coding block using a partitioning technique such as quad tree partitioning, binary tree partitioning, and/or ternary tree partitioning may be referred to as multi-tree partitioning.

Coding blocks generated by applying the multi-tree partitioning to a coding block may be referred to as lower coding blocks. When the partitioning depth of a coding block is k, the partitioning depth of the lower coding blocks is set to k + 1.

Contrarily, for coding blocks having a partitioning depth of k + 1, a coding block having a partitioning depth of k may be referred to as an upper coding block.

The partitioning type of the current coding block may be determined based on at least one among a partitioning type of an upper coding block and a partitioning type of a neighboring coding block. Here, the neighboring coding block is a coding block adjacent to the current coding block and may include at least one among a top neighboring block and a left neighboring block of the current coding block, and a neighboring block adjacent to the top-left corner. Here, the partitioning type may include at least one among whether or not a quad tree partitioning, whether or not a binary tree partitioning, binary tree partitioning direction, whether or not a ternary tree partitioning, and ternary tree partitioning direction.

In order to determine a partitioning type of a coding block, information indicating whether or not the coding block can be partitioned may be signaled through a bitstream. The information is a 1-bit flag of 'split_cu_flag', and when the flag is true, it indicates that the coding block is partitioned by a multi-tree partitioning technique.

When split_cu_flag is true, information indicating whether the coding block is quad-tree partitioned may be signaled through a bitstream. The information is a 1-bit flag of split_qt_flag, and when the flag is true, the coding block may be partitioned into four blocks.

For example, in the example shown in FIG. 5, as a coding tree unit is quad-tree partitioned, four coding blocks having a partitioning depth of 1 are generated. In addition, it is shown that quad tree partitioning is applied again to the first and fourth coding blocks among the four coding blocks generated as a result of the quad tree partitioning. As a result, four coding blocks having a partitioning depth of 2 may be generated.

In addition, coding blocks having a partitioning depth of 3 may be generated by applying the quad tree partitioning again to a coding block having a partitioning depth of 2.

When quad tree partitioning is not applied to the coding block, whether binary tree partitioning or ternary tree partitioning is performed on the coding block may be determined considering at least one among the size of the coding block, whether the coding block is positioned at the picture boundary, the maximum partitioning depth, and the partitioning type of a neighboring block. When it is determined to perform binary tree partitioning or ternary tree partitioning on the coding block, information indicating the partitioning direction may be signaled through a bitstream. The information may be a 1-bit flag of mtt_split_cu_vertical_flag. Based on the flag, whether the partitioning direction is a vertical direction or a horizontal direction may be determined. Additionally, information indicating whether binary tree partitioning or ternary tree partitioning is applied to the coding block may be signaled through a bitstream. The information may be a 1-bit flag of mtt_split_cu_binary_flag. Based on the flag, whether binary tree partitioning or ternary tree partitioning is applied to the coding block may be determined.

For example, in the example shown in FIG. 5, it is shown that vertical direction binary tree partitioning is applied to a coding block having a partitioning depth of 1, vertical direction ternary tree partitioning is applied to the left-side coding block among the coding blocks generated as a result of the partitioning, and vertical direction binary tree partitioning is applied to the right-side coding block.

When an apparatus for encoding or decoding a video is implemented, there is a problem in that a region larger than a threshold value is difficult to process due to hardware performance. For example, there is a problem in that when it is possible to simultaneously process up to 4,096 samples based on hardware performance, data units of a 64 × 64 size should be redundantly accessed and processed, and data cannot be processed simultaneously for the regions having samples more than 4,096. Like this, a basic unit of data processing may be defined as a pipeline-based data basic unit (Virtual Processing Data Unit, VPDU, hereinafter, referred to as a data basic unit).

The data basic unit may be classified as a square, non-square or non-rectangular type.

FIG. 6 is a view showing the shapes of data basic units.

Data basic units may include samples as many as or smaller than the maximum number of samples that can be processed simultaneously. For example, as shown in the example of FIG. 6 (a), square blocks having a 64 × 64 size may be set as data basic units. Alternatively, non-square blocks may be set as data basic units. For example, as shown in the example of FIG. 6 (b) or 6 (c), a block having a 32 × 128 size or a block having a 64 × 32 size may be set as a data basic unit.

Although not shown, triangular, L-shaped, and polygonal data basic units may be defined.

Information for determining a data basic unit may be signaled through a bitstream. The information may be for determining at least one among the size and the shape of the data basic unit. Based on the information, whether or not to allow a non-square data basic unit or whether or not to allow a non-rectangular data basic unit may be determined.

Alternatively, at least one among the size and the shape of a data basic unit may be predefined in the encoder and the decoder.

Whether or not to allow a partitioning type of a coding block may be determined considering the size of a data basic unit. For example, when a coding block generated as a result of partitioning a coding block is larger than the data basic unit, the partitioning may not be allowed. Alternatively, when a non-square coding block generated as a result of partitioning a coding block is larger than the data basic unit, the partitioning may not be allowed. For example, when the width or the height of a coding block is greater than a threshold value or when the number of samples included in a coding block is greater than a threshold value, binary tree or ternary tree partitioning may not be allowed. Accordingly, encoding of information related to the binary tree or ternary tree partitioning may be omitted.

Alternatively, it may be set to necessarily partition a coding block larger than the data basic unit. Alternatively, it may be set to necessarily perform binary tree partitioning or ternary tree partitioning on a coding block larger than the data basic unit. Accordingly, for a coding block larger than the data basic unit, although the flag split_flag indicating whether or not to partition a coding block is not encoded, the value of the flag may be derived as 1.

As another example, a coding block larger than the data basic unit may be partitioned into a plurality of subblocks. Here, the subblock may be set as a prediction unit, which is a basic unit for prediction, or a transform unit, which is a basic unit for transform and/or quantization. At this point, partitioning a coding block into a plurality of prediction units may be defined as VPDU prediction unit partitioning, and partitioning a coding block into a plurality of transform units may be defined as VPDU transform unit partitioning.

At least one among the VPDU prediction unit partitioning and the VPDU transform unit partitioning may be applied to a coding block. The partitioning type of a coding block according to application of the VPDU prediction unit partitioning may be set to be the same as the partitioning type of a coding block according to application of the VPDU transform unit partitioning.

When only the VPDU prediction unit partitioning is applied to a coding block, prediction is performed for each subblock, but transform and/or quantization may be performed for a coding block. At this point, a prediction mode such as a prediction encoding mode, an intra prediction mode, or an inter prediction mode may be determined for a coding block.

When only the VPDU transform unit partitioning is applied to a coding block, prediction is performed for a subblock, but transform and/or quantization may be performed for each subblock.

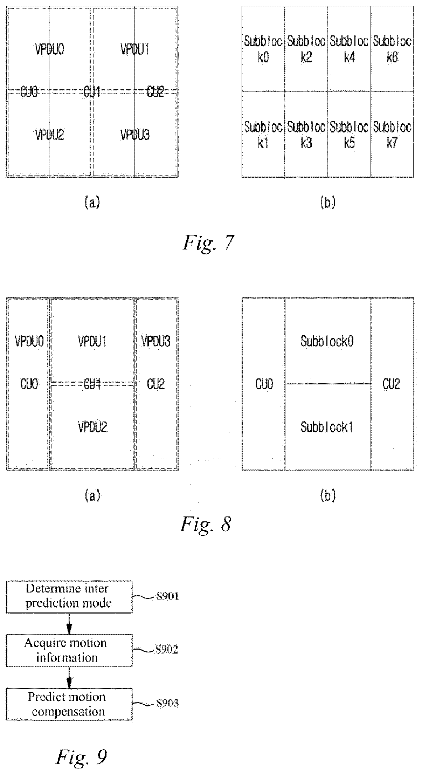

FIG. 7 and 8 are views showing examples of partitioning a coding block into a plurality of subblocks.

FIG. 7 is a view showing a partitioning pattern when only a square data basic unit is allowed, and FIG. 8 is a view showing a partitioning pattern when a square data basic unit and a non-square data basic unit are allowed.

When it is assumed that only square data basic units are allowed, in FIG. 7 (a) and 7 (b), CU0 and CU2 are defined as two different VPDUs, and CU1 is defined as four different VPDUs. Accordingly, CU0 and CU2 may be partitioned into two subblocks, and CU1 may be partitioned into four subblocks.

When it is assumed that square data basic units and non-square data basic units are allowed, in FIG. 8 (a) and 8 (b), CU0 and CU2 may be defined as one VPDU, whereas CU1 may be defined using two different VPDUs. Accordingly, CU0 and CU2 are not partitioned into subblocks, whereas CU1 may be partitioned into two subblocks.

At this point, CU1 may be partitioned into square subblocks or non-square subblocks. For example, CU1 may be partitioned into two square subblocks based on a horizontal line that partitions CU1 up and down. Alternatively, CU1 may be partitioned into two non-square subblocks based on a vertical line that partitions CU1 left and right.

When there is a plurality of partitioning type candidates applicable to a coding block, information indicating any one among the plurality of partitioning type candidates may be signaled through a bitstream. For example, the information may indicate whether a coding block is partitioned into square subblocks or whether a coding block is partitioned into non-square subblocks.

Alternatively, partitioning a coding block into square subblocks may be set to have a priority higher than that of partitioning a coding block into non-square subblocks. For example, partitioning a coding block into non-square subblocks may be allowed when it is not allowed to partition a coding block into square subblocks.

Alternatively, the partitioning type of a coding block may be determined based on the partitioning type of a parent node coding block. For example, it may be set to partition a coding block into square subblocks when the parent node coding block is partitioned based on a ternary tree. On the other hand, it may be set to partition a coding block into non-square subblocks when the parent node coding block is partitioned based on a binary tree or a ternary tree.

Inter prediction is a prediction encoding mode that predicts a current block by using information of a previous picture. For example, a block at the same position as the current block in the previous picture (hereinafter, a collocated block) may be set as the prediction block of the current block. Hereinafter, a prediction block generated based on a block at the same position as the current block will be referred to as a collocated prediction block.

On the other hand, when an object existing in the previous picture has moved to another position in the current picture, the current block may be effectively predicted by using a motion of the object. For example, when the moving direction and the size of an object can be known by comparing the previous picture and the current picture, a prediction block (or a prediction picture) of the current block may be generated considering motion information of the object. Hereinafter, the prediction block generated using motion information may be referred to as a motion prediction block.

A residual block may be generated by subtracting the prediction block from the current block. At this point, when there is a motion of an object, the energy of the residual block may be reduced by using the motion prediction block instead of the collocated prediction block, and therefore, compression performance of the residual block can be improved.

As described above, generating a prediction block by using motion information may be referred to as motion compensation prediction. In most inter prediction, a prediction block may be generated based on the motion compensation prediction.

The motion information may include at least one among a motion vector, a reference picture index, a prediction direction, and a bidirectional weight index. The motion vector represents the moving direction and the size of an object. The reference picture index specifies a reference picture of the current block among reference pictures included in a reference picture list. The prediction direction indicates any one among unidirectional L0 prediction, unidirectional L1 prediction, and bidirectional prediction (L0 prediction and L1 prediction). According to the prediction direction of the current block, at least one among motion information in the L0 direction and motion information in the L1 direction may be used. The bidirectional weight index specifies a weighting value applied to a L0 prediction block and a weighting value applied to a L 1 prediction block.

FIG. 9 is a flowchart illustrating an inter prediction method according to an embodiment of the present disclosure.

Referring to FIG. 9, the inter prediction method includes the steps of determining an inter prediction mode of a current block (S901), acquiring motion information of the current block according to the determined inter prediction mode (S902), and performing motion compensation prediction for the current block based on the acquired motion information (S903).

Here, the inter prediction mode represents various techniques for determining motion information of the current block, and may include an inter prediction mode that uses translational motion information and an inter prediction mode that uses affine motion information. For example, the inter prediction mode using translational motion information may include a merge mode and an advanced motion vector prediction mode, and the inter prediction mode using affine motion information may include an affine merge mode and an affine advanced motion vector prediction mode. The motion information of the current block may be determined based on a neighboring block adjacent to the current block or information parsed from a bitstream according to the inter prediction mode.

Hereinafter, the inter prediction method using affine motion information will be described in detail.

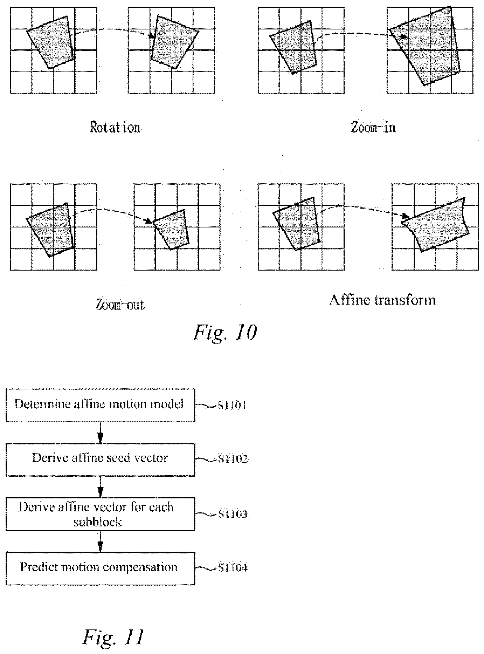

FIG. 10 is a view showing nonlinear motions of an object.

A nonlinear motion of an object may be generated in a video. For example, as shown in the example of FIG. 10, a nonlinear motion of an object, such as zoom-in, zoom-out, rotation, affine transform or the like of a camera, may occur. When a nonlinear motion of an object occurs, the motion of the object cannot be effectively expressed with a translational motion vector. Accordingly, encoding efficiency can be improved by using an affine motion instead of a translational motion in an area where a nonlinear motion of an object occurs.

FIG. 11 is a flowchart illustrating an inter prediction method based on an affine motion according to an embodiment of the present disclosure.

Whether an inter prediction technique based on an affine motion is applied to the current block may be determined based on the information parsed from a bitstream. Specifically, whether the inter prediction technique based on an affine motion is applied to the current block may be determined based on at least one among a flag indicating whether the affine merge mode is applied to the current block and a flag indicating whether the affine advanced motion vector prediction mode is applied to the current block.

When the inter prediction technique based on an affine motion is applied to the current block, an affine motion model of the current block may be determined (S1101). The affine motion model may be determined as at least one among a six-parameter affine motion model and a four-parameter affine motion model. The six-parameter affine motion model expresses an affine motion using six parameters, and the four-parameter affine motion model expresses an affine motion using four parameters.

Equation 1 expresses an affine motion using six parameters. The affine motion represents a nontranslational motion for a predetermined area determined by affine seed vectors.

【Equation 1】

$$v_x = ax - by + e$$
$$v_y = cx + dy + f$$

When an affine motion is expressed using six parameters, a complicated motion can be expressed. However, as the number of bits required for encoding each of the parameters increases, encoding efficiency may be lowered. Accordingly, the affine motion may be expressed using four parameters. Equation 2 expresses an affine motion using four parameters.

【Equation 2】

$$v_x = ax - by + e$$
$$v_y = bx + ay + f$$

Information for determining an affine motion model of the current block may be encoded and signaled through a bitstream. For example, the information may be a 1-bit flag of 'affine_type_flag'. When the value of the flag is 0, it may indicate that a 4-parameter affine motion model is applied, and when the value of the flag is 1, it may indicate that a 6-parameter affine motion model is applied. The flag may be encoded by the unit of slice, tile, or block (e.g., by the unit of coding block or coding tree). When a flag is signaled at the slice level, an affine motion model determined at the slice level may be applied to all blocks belonging to the slice.

Alternatively, an affine motion model of the current block may be determined based on an affine inter prediction mode of the current block. For example, when the affine merge mode is applied, the affine motion model of the current block may be determined as a 4-parameter motion model. On the other hand, when the affine advanced motion vector prediction mode is applied, information for determining the affine motion model of the current block may be encoded and signaled through a bitstream. For example, when the affine advanced motion vector prediction mode is applied to the current block, the affine motion model of the current block may be determined based on the 1-bit flag of 'affine_type_flag'.

Next, an affine seed vector of the current block may be derived (S 1102). When a 4-parameter affine motion model is selected, motion vectors at two control points of the current block may be derived. On the other hand, when a 6-parameter affine motion model is selected, motion vectors at three control points of the current block may be derived. The motion vector at a control point may be referred to as an affine seed vector. The control point may include at least one among the top-left corner, the top-right corner, and the bottom-left corner of the current block.

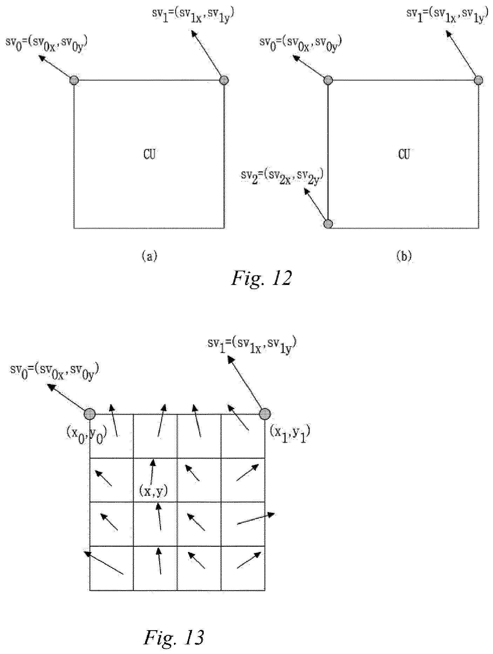

FIG. 12 is a view showing an example of affine seed vectors of each affine motion model.

In the 4-parameter affine motion model, affine seed vectors may be derived for two among the top-left corner, the top-right corner, and the bottom-left corner. For example, as shown in the example of FIG. 12 (a), when a 4-parameter affine motion model is selected, an affine vector may be derived using the affine seed vector sv0 for the top-left corner of the current block (e.g., top-left sample (x0, y0)) and the affine seed vector sv1 for the top-right corner of the current block (e.g., the top-right sample (x1, y1)). It is also possible to use an affine seed vector for the bottom-left corner instead of the affine seed vector for the top-left corner, or use an affine seed vector for the bottom-left corner instead of the affine seed vector for the top-right corner.

In the 6-parameter affine motion model, affine seed vectors may be derived for the top-left corner, the top-right corner, and the bottom-left corner. For example, as shown in the example of FIG. 12 (b), when a 6-parameter affine motion model is selected, an affine vector may be derived using the affine seed vector sv0 for the top-left corner of the current block (e.g., top-left sample (x0, y0)), the affine seed vector sv1 for the top-right corner of the current block (e.g., the top-right sample (x1, y1)), and the affine seed vector sv2 for the bottom-left corner of the current block (e.g., bottom-left sample (x2, y2)).

In the embodiment described below, in the 4-parameter affine motion model, the affine seed vectors of the top-left control point and the top-right control point will be referred to as a first affine seed vector and a second affine seed vector, respectively. In the embodiments using the first affine seed vector and the second affine seed vector described below, at least one among the first affine seed vector and the second affine seed vector may be replaced by the affine seed vector of the bottom-left control point (a third affine seed vector) or the affine seed vector of the bottom-right control point (a fourth affine seed vector).

In addition, in the 6-parameter affine motion model, the affine seed vectors of the top-left control point, the top-right control point, and the bottom-left control point will be referred to as a first affine seed vector, a second affine seed vector, and a third affine seed vector, respectively. In the embodiments using the first affine seed vector, the second affine seed vector, and the third affine seed vector described below, at least one among the first affine seed vector, the second affine seed vector, and the third affine seed vector may be replaced by the affine seed vector of the bottom-right control point (a fourth affine seed vector).

An affine vector may be derived for each subblock by using the affine seed vectors (S1103). Here, the affine vector represents a translational motion vector derived based on the affine seed vectors. The affine vector of a subblock may be referred to as an affine subblock motion vector or a subblock motion vector.

FIG. 13 is a view showing an example of affine vectors of subblocks in a 4-parameter motion model.

The affine vector of the subblock may be derived based on the position of the control point, the position of the subblock, and the affine seed vector. For example, Equation 3 shows an example of deriving an affine subblock vector.

【Equation 3】

$$v_x = \frac{(sv_{1x} - sv_{0x})}{(x_1 - x_0)}(x - x_0) - \frac{(sv_{1y} - sv_{0y})}{(x_1 - x_0)}(y - y_0) + sv_{0x}$$

$$v_y = \frac{(sv_{1y} - sv_{0y})}{(x_1 - x_0)}(x - x_0) + \frac{(sv_{1x} - sv_{0x})}{(x_1 - x_0)}(y - y_0) + sv_{0y}$$

In Equation 3, (x, y) denotes the position of a subblock. Here, the position of a subblock indicates the position of a reference sample included in the subblock. The reference sample may be a sample positioned at the top-left corner of the subblock, or a sample of which at least one among the x-axis and y-axis coordinates is a center point. (x0, y0) denotes the position of the first control point, and (sv0x, sv0y) denotes the first affine seed vector. In addition, (x1, y1) denotes the position of the second control point, and (sv1x, sv1y) denotes the second affine seed vector.

When the first control point and the second control point correspond to the top-left corner and the top-right corner of the current block respectively, x1-x0 may be set to a value equal to the width of the current block.

Thereafter, motion compensation prediction for each subblock may be performed using the affine vector of each subblock (S1104). As a result of performing the motion compensation prediction, a prediction block for each subblock may be generated. The prediction blocks of the subblocks may be set as the prediction blocks of the current block.

Next, an inter prediction method using translational motion information will be described in detail.

Motion information of the current block may be derived from motion information of another block. Here, another block may be a block encoded/decoded by inter prediction before the current block. Setting the motion information of the current block to be equal to the motion information of another block may be defined as a merge mode. In addition, setting the motion vector of another block as the prediction value of the motion vector of the current block may be defined as an advanced motion vector prediction mode.

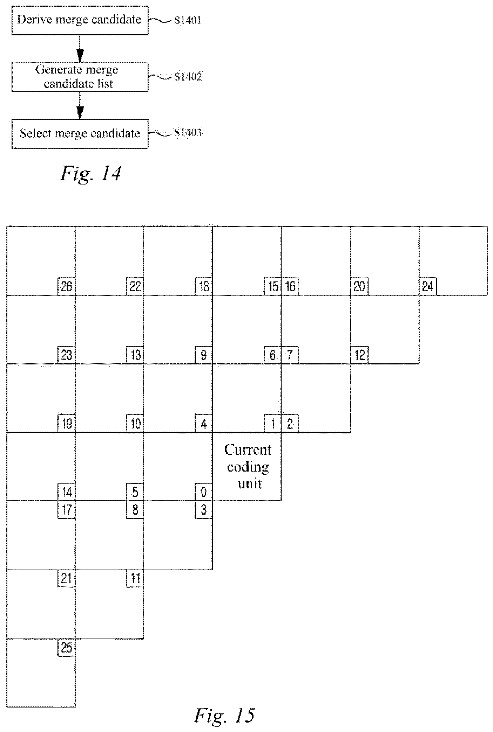

FIG. 14 is a flowchart illustrating a process of deriving motion information of a current block using a merge mode.

A merge candidate of the current block may be derived (S 1401). The merge candidate of the current block may be derived from a block encoded/decoded by inter prediction before the current block.

FIG. 15 is a view showing an example of candidate blocks used for deriving a merge candidate.

The candidate blocks may include at least one among neighboring blocks including a sample adjacent to the current block or non-neighboring blocks including a sample not adjacent to the current block. Hereinafter, samples for determining candidate blocks are defined as reference samples. In addition, a reference sample adjacent to the current block is referred to as a neighboring reference sample, and a reference sample not adjacent to the current block is referred to as a non-neighboring reference sample.

The neighboring reference sample may be included in a neighboring column of the leftmost column of the current block or a neighboring row of the uppermost row of the current block. For example, when the coordinates of the top-left sample of the current block is (0, 0), at least one among a block including a reference sample at the position of (-1, H-1), a block including a reference sample at the position of (W-1, - 1), a block including a reference sample at the position of (W, -1), a block including a reference sample at the position of (-1, H), and a block including a reference sample at the position of (-1, -1) may be used as a candidate block. Referring to the drawing, neighboring blocks of index 0 to 4 may be used as candidate blocks.

The non-neighboring reference sample represents a sample of which at least one among an x-axis distance and a y-axis distance from a reference sample adjacent to the current block has a predefined value. For example, at least one among a block including a reference sample of which the x-axis distance from the left reference sample is a predefined value, a block including a non-neighboring sample of which the y-axis distance from the top reference sample is a predefined value, and a block including a non-neighboring sample of which the x-axis distance and the y-axis distance from the top-left reference sample are predefined values may be used as a candidate block. The predefined values may be a natural number such as 4, 8, 12, 16 or the like. Referring to the drawing, at least one among the blocks of index 5 to 26 may be used as a candidate block.

A sample not positioned on the same vertical line, horizontal line, or diagonal line as the neighboring reference sample may be set as a non-neighboring reference sample.

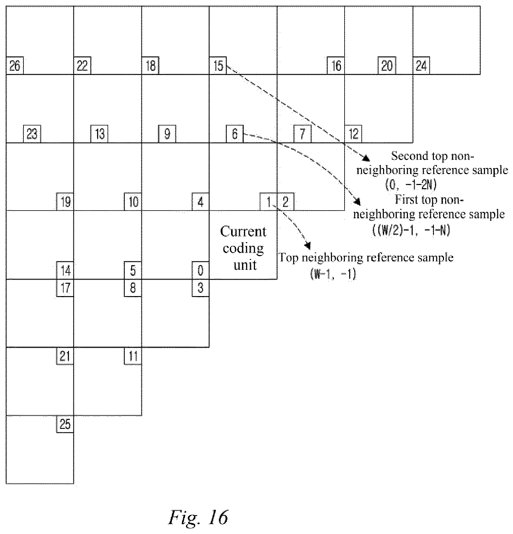

FIG. 16 is a view showing positions of reference samples.

As shown in the example of FIG. 16, the x coordinates of the top non-neighboring reference samples may be set to be different from the x coordinates of the top neighboring reference samples. For example, when the position of the top neighboring reference sample is (W-1, -1), the position of a top non-neighboring reference sample separated as much as N from the top neighboring reference sample on the y-axis may be set to ((W/2)-1, -1-N), and the position of a top non-neighboring reference sample separated as much as 2N from the top neighboring reference sample on the y-axis may be set to (0, -1-2N). That is, the position of a non-adjacent reference sample may be determined based on the position of an adjacent reference sample and a distance from the adj acent reference sample.

Hereinafter, a candidate block including a neighboring reference sample among the candidate blocks is referred to as a neighboring block, and a block including a non-neighboring reference sample is referred to as a non-neighboring block.

When the distance between the current block and the candidate block is greater than or equal to a threshold value, the candidate block may be set to be unavailable as a merge candidate. The threshold value may be determined based on the size of the coding tree unit. For example, the threshold value may be set to the height (ctu_height) of the coding tree unit or a value obtained by adding or subtracting an offset to or from the height (e.g., ctu_height $\pm$ N) of the coding tree unit. The offset N is a value predefined in the encoder and the decoder, and may be set to 4, 8, 16, 32 or ctu_height.

When the difference between the y-axis coordinate of the current block and the y-axis coordinate of a sample included in a candidate block is greater than the threshold value, the candidate block may be determined to be unavailable as a merge candidate.

Alternatively, a candidate block that does not belong to the same coding tree unit as the current block may be set to be unavailable as a merge candidate. For example, when a reference sample deviates from the top boundary of a coding tree unit to which the current block belongs, a candidate block including the reference sample may be set to be unavailable as a merge candidate.

When the top boundary of the current block is adj acent to the top boundary of the coding tree unit, a plurality of candidate blocks is determined to be unavailable as a merge candidate, and thus the encoding/decoding efficiency of the current block may decrease. To solve this problem, candidate blocks may be set so that the number of candidate blocks positioned on the left side of the current block is greater than the number of candidate blocks positioned on the top of the current block.

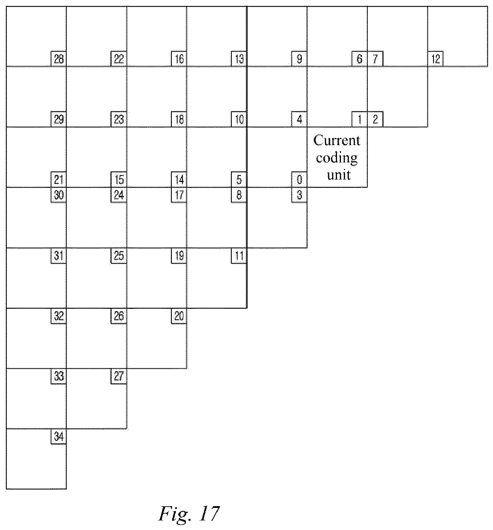

FIG. 17 is a view showing an example of candidate blocks used for deriving a merge candidate.

As shown in the example of FIG. 17, top blocks belonging to top N block columns of the current block and left-side blocks belonging to M left-side block columns of the current block may be set as candidate blocks. At this point, the number of left-side candidate blocks may be set to be greater than the number of top candidate blocks by setting M to be greater than N.

For example, the difference between the y-axis coordinate of the reference sample in the current block and the y-axis coordinate of the top block that can be used as a candidate block may be set not to exceed N times of the height of the current block. In addition, the difference between the x-axis coordinate of the reference sample in the current block and the x-axis coordinate of the left-side block that can be used as a candidate block may be set not to exceed M times of the width of the current block.

For example, in the example shown in FIG. 17, it is shown that blocks belonging to the top two block columns of the current block and blocks belonging to the left five block columns of the current block are set as candidate blocks.

As another example, when a candidate block does not belong to a coding tree unit the same as that of the current block, a merge candidate may be derived using a block belonging to the same coding tree unit as the current block or a block including a reference sample adjacent to the boundary of the coding tree unit, instead of the candidate block.

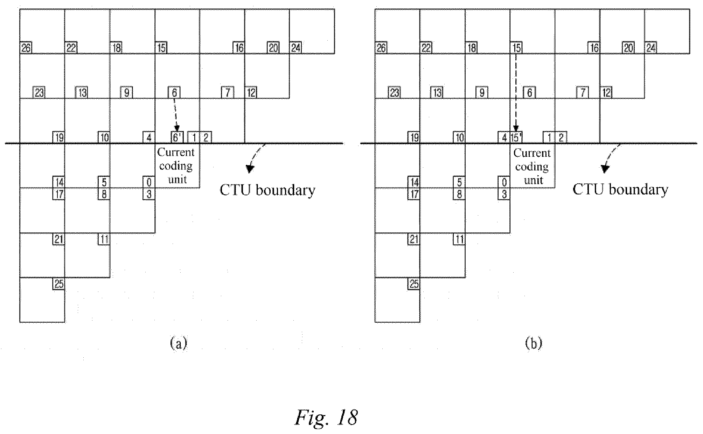

FIG. 18 is a view showing an example in which the position of a reference sample is changed.

When a reference sample is included in a coding tree unit different from the current block, and the reference sample is not adjacent to the boundary of the coding tree unit, a candidate block may be determined using a reference sample adjacent to the boundary of the coding tree unit, instead of the reference sample.

For example, in the examples shown in FIG. 18 (a) and 18 (b), when the top boundary of the current block and the top boundary of the coding tree unit are in contact with each other, the reference samples on the top of the current block belong to a coding tree unit different from the current block. Among the reference samples belonging to the coding tree unit different from the current block, a reference sample not adjacent to the top boundary of the coding tree unit may be replaced with a sample adjacent to the top boundary of the coding tree unit.

For example, as shown in the example of FIG. 18 (a), the reference sample at position 6 is replaced with the sample at position 6' positioned at the top boundary of the coding tree unit, and as shown in the example of FIG. 18 (b), the reference sample at position 15 is replaced with the sample at position 15' positioned at the top boundary of the coding tree unit. At this point, the y coordinate of the replacement sample is changed to a position adjacent to the coding tree unit, and the x coordinate of the replacement sample may be set to be equal to the reference sample. For example, the sample at position 6' may have the same x-coordinate as the sample at position 6, and the sample at position 15' may have the same x-coordinate as the sample at position 15.

Alternatively, a value obtained by adding or subtracting an offset to or from the x coordinate of the reference sample may be set as the x coordinate of the replacement sample. For example, when the x-coordinates of the neighboring reference sample positioned on the top of the current block and the non-neighboring reference sample are the same, a value obtained by adding or subtracting an offset to or from the x coordinate of the reference sample may be set as the x coordinate of the replacement sample. This is for preventing the replacement sample replacing the non-neighboring reference sample from being placed at the same position as another non-neighboring reference sample or neighboring reference sample.

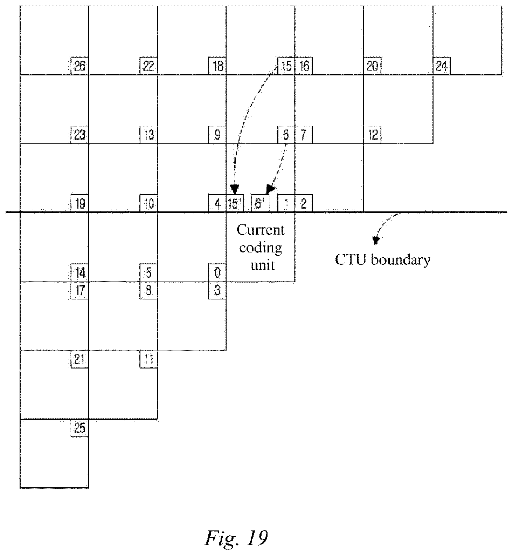

FIG. 19 is a view showing an example in which the position of a reference sample is changed.

In replacing a reference sample that is included in a coding tree unit different from the current block and is not adjacent to the boundary of the coding tree unit with a sample positioned at the boundary of the coding tree unit, a value obtained by adding or subtracting an offset to and from the x coordinate of the reference sample may be set as the x-coordinate of the replacement sample.

For example, in the example shown in FIG. 19, the reference sample at position 6 and the reference sample at position 15 may be replaced with the sample at position 6' and the sample at position 15' respectively, of which the y coordinates are the same as that of the row adjacent to the top boundary of the coding tree unit. At this point, the x-coordinate of the sample at position 6' may be set to a value obtained by subtracting W/2 from the x-coordinate of the reference sample at position 6, and the x-coordinate of the sample at position 15' may be set to a value obtained by subtracting W-1 from the x-coordinate of the reference sample at position 15.

Unlike the examples shown in FIG. 18 and 19, the y coordinate of the row positioned on the top of the uppermost row of the current block or the y coordinate of the top boundary of the coding tree unit may be set as the y coordinate of the replacement sample.

Although not shown, a sample replacing the reference sample may be determined based on the left-side boundary of the coding tree unit. For example, when the reference sample is not included in the same coding tree unit as the current block and is not adjacent to the left-side boundary of the coding tree unit, the reference sample may be replaced with a sample adjacent to the left-side boundary of the coding tree unit. At this point, the replacement sample may have a y-coordinate the same as that of the reference sample, or may have a y-coordinate obtained by adding or subtracting an offset to and from the y-coordinate of the reference sample.

Thereafter, a block including the replacement sample may be set as a candidate block, and a merge candidate of the current block may be derived based on the candidate block.

A merge candidate may also be derived from a temporally neighboring block included in a picture different from the current block. For example, a merge candidate may be derived from a collocated block included in a collocated picture.

The motion information of the merge candidate may be set to be equal to the motion information of the candidate block. For example, at least one among a motion vector, a reference picture index, a prediction direction, and a bidirectional weight index of the candidate block may be set as motion information of the merge candidate.

A merge candidate list including merge candidates may be generated (S 1402). The merge candidates may be divided into an adjacent merge candidate derived from a neighboring block adjacent to the current block and a non-adjacent merge candidate derived from a non-neighboring block.

Indexes of the merge candidates in the merge candidate list may be assigned in a predetermined order. For example, an index assigned to an adjacent merge candidate may have a value smaller than an index assigned to a non-adjacent merge candidate. Alternatively, an index may be assigned to each of the merge candidates based on the index of each block shown in FIG. 15 or 17.

When a plurality of merge candidates is included in the merge candidate list, at least one among the plurality of merge candidates may be selected (S1403). At this point, information indicating whether motion information of the current block is derived from an adjacent merge candidate may be signaled through a bitstream. The information may be a 1-bit flag. For example, a syntax element isAdjancentMergeFlag indicating whether the motion information of the current block is derived from an adjacent merge candidate may be signaled through a bitstream. When the value of the syntax element isAdjancentMergeFlag is 1, motion information of the current block may be derived based on the adjacent merge candidate. On the other hand, when the value of the syntax element isAdjancentMergeFlag is 0, motion information of the current block may be derived based on a non-adjacent merge candidate.

Table 1 shows a syntax table including syntax element isAdjancentMergeFlag.

[Table 1]

| coding_unit (x0, y0, cbWidth, cbHeight, treeType) { | Descriptor |
|---|---|
| if (slice_type! = I) { | |
| **pred_mode_flag** | ae(v) |
| } | |
| if (CuPredMode[x0][y0] = = MODE_INTRA) { | |
| if (treeType = = SINGLE_TREE \| \| treeType = = DUAL_TREE_LUMA) { | |
| **intra_luma_mpm_flag**[x0][y0] | |
| if (intra_luma_mpm_flag[x0][y0] ) | |
| **intra_luma_mpm_idx**[x0][y0] | ae(v) |
| else | |
| **intra_luma_mpm_remainder**[x0][y0] | ae(v) |
| }      if (treeType = = SINGLE_TREE \| treeType = = DUAL_TREE_CHROMA) | |
| **intra_chroma_pred_mode**[x0][y0] | ae(v) |
| } else { | |
| if (cu_skip_falg[x0][y0]) { | |
| if (MaxNumMergeCand > 1){ | |
| **isAdjacentMergeflag** | ae(v) |
| if (isAdjcanetMergeflag){ | |
| **merge_idx[x0][y0]** | ae(v) |
| } else { | |
| **NA_merge_idx[x0][y0]** | ae(v) |
| } | |
| } | |
| } else { /* MODE_INTER*/ | |
| **merge_nag[x0][y0]** | ae(v) |

(continued)

| | |
|---|---|
| if (merge_flag[x0][y0]){ | |
| if (MaxNumMergeCand > 1){ | |
| **isAdjacentMergeflag** | ae(v) |
| if (isAdjcanetMergeflag){ | |
| **merge_idx[x0][y0]** | ae(v) |
| } else { | |
| **NA_merge_idx[x0][y0]** | ae(v) |
| } | |
| } | |
| } | |
| if (CuPredMode[ x0 ][ y0 ]! = MODE_INTRA) | |
| **cu_cbf** | ae(v) |
| if (cu_cbf) { | |
| transform_tree( x0, y0, cbWidth, cbHeight, treeType) | |
| } | |

Information for specifying any one among a plurality of merge candidates may be signaled through a bitstream. For example, information indicating an index of any one among the merge candidates included in the merge candidate list may be signaled through a bitstream.

When isAdjacentMergeflag is 1, syntax element merge_idx specifying any one among the adjacent merge candidates may be signaled. The maximum value of syntax element merge_idx may be set to a value obtained by subtracting 1 from the number of adjacent merge candidates.

When isAdjacentMergeflag is 0, syntax element NA_merge_idx specifying any one among the non-adjacent merge candidates may be signaled. The syntax element NA_merge_idx represents a value obtained by subtracting the number of adjacent merge candidates from the index of the non-adjacent merge candidate. The decoder may select a non-adjacent merge candidate by adding the number of adjacent merge candidates to an index specified by NA_merge_idx.

When the number of merge candidates included in the merge candidate list is smaller than a threshold value, the merge candidate included in the inter-region motion information list may be added to the merge candidate list. Here, the threshold value may be the maximum number of merge candidates that the merge candidate list may include or a value obtained by subtracting an offset from the maximum number of merge candidates. The offset may be a natural number such as 1, 2 or the like. The inter-region motion information list may include a merge candidate derived based on a block encoded/decoded before the current block.

The inter-region motion information list includes a merge candidate derived from a block encoded/decoded based on inter prediction in the current picture. For example, motion information of a merge candidate included in the inter-region motion information list may be set to be equal to motion information of a block encoded/decoded based on inter prediction. Here, the motion information may include at least one among a motion vector, a reference picture index, a prediction direction, and a bidirectional weight index.

For convenience of explanation, a merge candidate included in the inter-region motion information list will be referred to as an inter-region merge candidate.

The maximum number of merge candidates that the inter-region motion information list may include may be predefined by an encoder and a decoder. For example, the maximum number of merge candidates that can be included in the inter-region motion information list may be 1, 2, 3, 4, 5, 6, 7, 8 or more (e.g., 16).

Alternatively, information indicating the maximum number of merge candidates in the inter-region motion information list may be signaled through a bitstream. The information may be signaled at the sequence, picture, or slice level.

Alternatively, the maximum number of merge candidates of the inter-region motion information list may be determined according to the size of a picture, the size of a slice, or the size of a coding tree unit.

The inter-region motion information list may be initialized by the unit of picture, slice, tile, brick, coding tree unit, or coding tree unit line (row or column). For example, when a slice is initialized, the inter-region motion information list is also initialized, and the inter-region motion information list may not include any merge candidate.

Alternatively, information indicating whether or not to initialize the inter-region motion information list may be signaled through a bitstream. The information may be signaled at the slice, tile, brick, or block level. Until the information indicates to initialize the inter-region motion information list, a previously configured inter-region motion information list may be used.

Alternatively, information on the initial inter-region merge candidate may be signaled through a picture parameter set or a slice header. Although the slice is initialized, the inter-region motion information list may include the initial inter-region merge candidate. Accordingly, an inter-region merge candidate may be used for a block that is the first encoding/decoding target in the slice.

Blocks are encoded/decoded according to an encoding/decoding order, and blocks encoded/decoded based on inter prediction may be sequentially set as an inter-region merge candidate according to an encoding/decoding order.

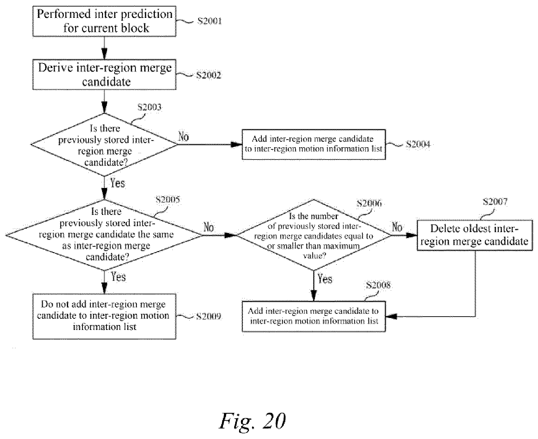

FIG. 20 is a flowchart illustrating a process of updating an inter-region motion information list.

When inter prediction is performed on the current block (S2001), an inter-region merge candidate may be derived based on the current block (S2002). Motion information of the inter-region merge candidate may be set to be equal to the motion information of the current block.

When the inter-region motion information list is empty (S2003), the inter-region merge candidate derived based on the current block may be added to the inter-region motion information list (S2004).

When the inter-region motion information list already includes the inter-region merge candidate (S2003), a redundancy check may be performed on the motion information of the current block (or the inter-region merge candidate derived based on the current block) (S2005). The redundancy check is for determining whether motion information of an inter-region merge candidate previously stored in the inter-region motion information list and motion information of the current block are the same. The redundancy check may be performed on all inter-region merge candidates previously stored in the inter-region motion information list. Alternatively, the redundancy check may be performed on inter-region merge candidates having an index larger than a threshold value or smaller than a threshold value among inter-region merge candidates previously stored in the inter-region motion information list.

When an inter-region merge candidate having the same motion information as the motion information of the current block is not included, the inter-region merge candidate derived based on the current block may be added to the inter-region motion information list (S2008). Whether the inter-region merge candidates are the same may be determined based on whether motion information (e.g., a motion vector and/or a reference picture index) of the inter-region merge candidates is the same.

At this point, when the maximum number of inter-region merge candidates are already stored in the inter-region motion information list (S2006), the oldest inter-region merge candidate is deleted (S2007), and the inter-region merge candidate derived based on the current block may be added to the inter-region motion information list (S2008).

Each of the inter-region merge candidates may be identified by an index. When an inter-region merge candidate derived from the current block is added to the inter-region motion information list, the lowest index (e.g., 0) is assigned to the inter-region merge candidate, and indexes of the previously stored inter-region merge candidates may be increased by 1. At this point, when the maximum number of inter-region merge candidates are already stored in the inter-region motion information list, an inter-region merge candidate having the largest index is removed.

Alternatively, when the inter-region merge candidate derived from the current block is added to the inter-region motion information list, the largest index may be assigned to the inter-region merge candidate. For example, when the number of inter-region merge candidates previously stored in the inter-region motion information list is smaller than a maximum value, an index having the same value as the number of previously stored inter-region merge candidates may be assigned to the inter-region merge candidate. Alternatively, when the number of inter-region merge candidates previously stored in the inter-region motion information list is the same as the maximum value, an index subtracting 1 from the maximum value may be assigned to the inter-region merge candidate. In addition, an inter-region merge candidate having the smallest index is removed, and indexes of remaining previously stored inter-region merge candidates may be decreased by 1.

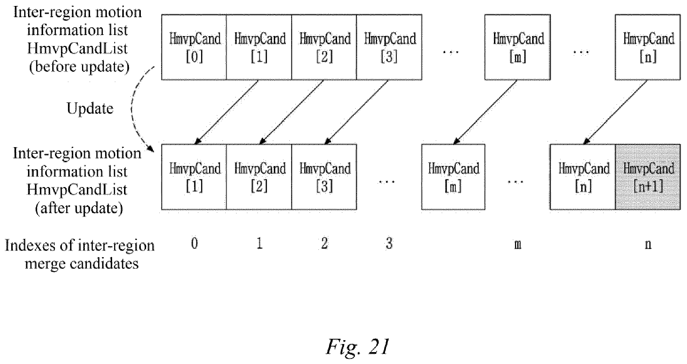

FIG. 21 is a view showing an embodiment of updating an inter-region merge candidate list.

It is assumed that as the inter-region merge candidate derived from the current block is added to the inter-region merge candidate list, the largest index is assigned to the inter-region merge candidate. In addition, it is assumed that the maximum number of inter-region merge candidates is already stored in the inter-region merge candidate list.

When the inter-region merge candidate HmvpCand[n + 1] derived from the current block is added to the inter-region merge candidate list HmvpCandList, the inter-region merge candidate HmvpCand[0] having the smallest index among the previously stored inter-region merge candidates is deleted, and the indexes of the remaining inter-region merge candidates may be decreased by 1. In addition, the index of the inter-region merge candidate HmvpCand[n + 1] derived from the current block may be set to a maximum value (n in the example shown in FIG. 21).

When an inter-region merge candidate the same as the inter-region merge candidate derived based on the current block is previously stored (S2005), the inter-region merge candidate derived based on the current block may not be added to the inter-region motion information list (S2009).

Alternatively, as the inter-region merge candidate derived based on the current block is added to the inter-region motion information list, a previously stored inter-region merge candidate that is the same as the inter-region merge candidate may be removed. In this case, an effect the same as newly updating the index of the previously stored inter-region merge candidate is obtained.

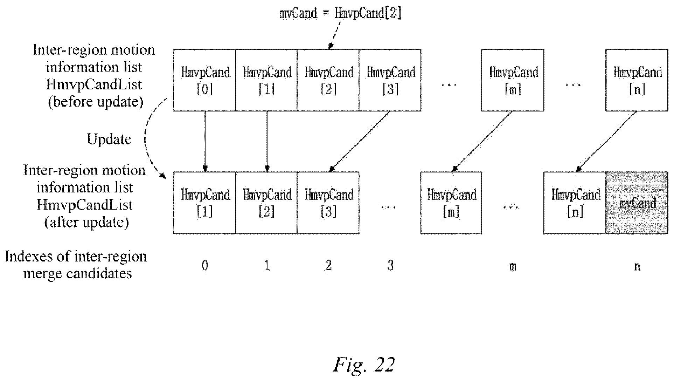

FIG. 22 is a view showing an example in which an index of a previously stored inter-region merge candidate is updated.

When the index of a previously stored inter-region merge candidate mvCand that is the same as the inter-region merge candidate mvCand derived based on the current block is hIdx, the previously stored inter-region merge candidate is deleted, and indexes of inter-region merge candidates having an index larger than hIdx may be decreased by 1. For example, in the example shown in FIG. 22, it is shown that HmvpCand[2] the same as mvCand is deleted from the inter-region motion information list HvmpCandList, and the indexes of HmvpCand[3] to HmvpCand[n] are decreased by 1.

In addition, the inter-region merge candidate mvCand derived based on the current block may be added to the end of the inter-region motion information list.

Alternatively, the index assigned to the previously stored inter-region merge candidate that is the same as the inter-region merge candidate derived based on the current block may be updated. For example, the index of the previously stored inter-region merge candidate may be changed to a minimum value or a maximum value.

It may be set not to add motion information of blocks included in a predetermined area to the inter-region motion information list. For example, an inter-region merge candidate derived based on motion information of a block included in the merge processing area may not be added to the inter-region motion information list. Since an encoding/decoding order is not defined for the blocks included in the merge processing area, it is inappropriate to use motion information of any one among the blocks for inter prediction of another block. Accordingly, inter-region merge candidates derived based on the blocks included in the merge processing area may not be added to the inter-region motion information list.

When motion compensation prediction is performed by the unit of subblock, an inter-region merge candidate may be derived based on motion information of a representative subblock among a plurality of subblocks included in the current block. For example, when a subblock merge candidate is used for the current block, an inter-region merge candidate may be derived based on motion information of a representative subblock among the subblocks.

Motion vectors of the subblocks may be derived in the following order. First, any one among the merge candidates included in the merge candidate list of the current block is selected, and an initial shift vector (shVector) may be derived based on the motion vector of the selected merge candidate. Then, a shifted subblock, in which the position of the reference sample is (xColSb, yColSb), may be derived as the initial shift vector is added at the position (xSb, ySb) of the reference sample (e.g., the top-left sample or the sample at the center) of each subblock in the coding block. Equation 4 shows an equation for deriving the shifted subblock.

【Equation 4】

$$(xColSb, yColSb) = (xSb + shVector[0] \gg 4, ySb + shVector[1] \gg 4)$$

Then, the motion vector of a collocated block corresponding to the center position of the subblock including (xColSb, yColSb) may be set as the motion vector of the subblock including (xSb, ySb).

The representative subblock may mean a subblock including the top-left sample or the sample at the center of the current block.

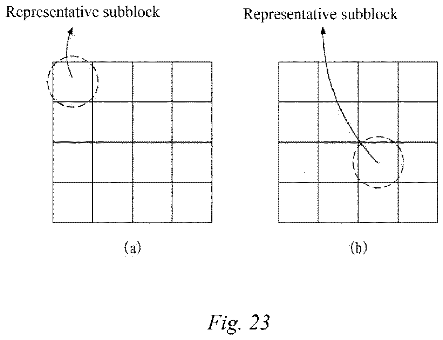

FIG. 23 is a view showing the position of a representative subblock.

FIG. 23 (a) shows an example in which the subblock positioned at the top-left of the current block is set as the representative subblock, and FIG. 23 (b) shows an example in which the subblock positioned at the center of the current block is set as the representative subblock. When motion compensation prediction is performed by unit of subblock, an inter-region merge candidate of the current block may be derived based on the motion vector of the subblock including the top-left sample of the current block or the subblock including the sample at the center of the current block.

It may be determined whether or not to use the current block as an inter-region merge candidate, based on the inter prediction mode of the current block. For example, a block encoded/decoded based on an affine motion model may be set to be unavailable as an inter-region merge candidate. Accordingly, although the current block is encoded/decoded by inter prediction, when the inter prediction mode of the current block is the affine prediction mode, the inter-region motion information list may not be updated based on the current block.

Alternatively, the inter-region merge candidate may be derived based on at least one subblock vector among the subblocks included in the block encoded/decoded based on the affine motion model. For example, the inter-region merge candidate may be derived using a subblock positioned at the top-left, a subblock positioned at the center, or a subblock positioned at the top-right side of the current block. Alternatively, an average value of subblock vectors of a plurality of subblocks may be set as the motion vector of the inter-region merge candidate.

Alternatively, the inter-region merge candidate may be derived based on an average value of affine seed vectors of the block encoded/decoded based on the affine motion model. For example, an average of at least one among the first affine seed vector, the second affine seed vector, and the third affine seed vector of the current block may be set as the motion vector of the inter-region merge candidate.

Alternatively, an inter-region motion information list may be configured for each inter prediction mode. For example, at least one among an inter-region motion information list for a block encoded/decoded by intra-block copy, an inter-region motion information list for a block encoded/decoded based on a translational motion model, and an inter-region motion information list for a block encoded/decoded based on an affine motion model may be defined. According to the inter prediction mode of the current block, any one among a plurality of inter-region motion information lists may be selected.

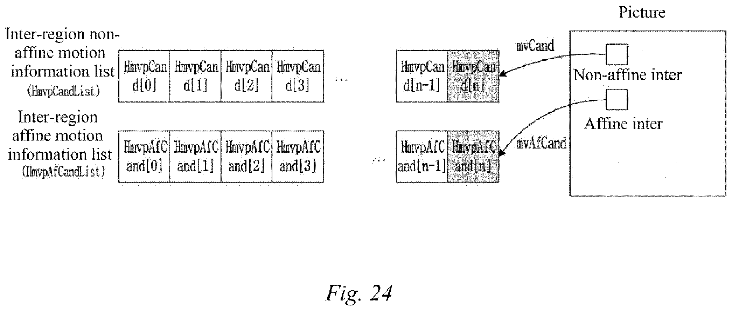

FIG. 24 is a view showing an example in which an inter-region motion information list is generated for each inter prediction mode.

When a block is encoded/decoded based on a non-affine motion model, an inter-region merge candidate mvCand derived based on the block may be added to an inter-region non-affine motion information list HmvpCandList. On the other hand, when a block is encoded/decoded based on an affine motion model, an inter-region merge candidate mvAfCand derived based on the block may be added to an inter-region affine motion information list HmvpAfCandList.

Affine seed vectors of a block encoded/decoded based on the affine motion model may be stored in an inter-region merge candidate derived from the block. Accordingly, the inter-region merge candidate may be used as a merge candidate for deriving the affine seed vector of the current block.

In addition to the inter-region motion information list described above, an additional inter-region motion information list may be defined. In addition to the inter-region motion information list described above (hereinafter, referred to as a first inter-region motion information list), a long-term motion information list (hereinafter, referred to as a second inter-region motion information list) may be defined. Here, the long-term motion information list includes long-term merge candidates.

When both the first inter-region motion information list and the second inter-region motion information list are empty, first, inter-region merge candidates may be added to the second inter-region motion information list. Only after the number of available inter-region merge candidates reaches the maximum number in the second inter-region motion information list, inter-region merge candidates may be added to the first inter-region motion information list.

Alternatively, one inter-region merge candidate may be added to both the second inter-region motion information list and the first inter-region motion information list.

At this point, the second inter-region motion information list, the configuration of which has been completed, may not be updated any more. Alternatively, when the decoded region is greater than or equal to a predetermined ratio of the slice, the second inter-region motion information list may be updated. Alternatively, the second inter-region motion information list may be updated for every N coding tree unit lines.

On the other hand, the first inter-region motion information list may be updated whenever a block encoded/decoded by inter prediction is generated. However, it may be set not to use the inter-region merge candidate added to the second inter-region motion information list, to update the first inter-region motion information list.

Information for selecting any one among the first inter-region motion information list and the second inter-region motion information list may be signaled through a bitstream. When the number of merge candidates included in the merge candidate list is smaller than a threshold value, merge candidates included in the inter-region motion information list indicated by the information may be added to the merge candidate list.

Alternatively, an inter-region motion information list may be selected based on the size and shape of the current block, inter prediction mode, whether bidirectional prediction is enabled, whether motion vector refinement is enabled, or whether triangular partitioning is enabled.

Alternatively, although an inter-region merge candidate included in the first inter-region motion information list is added, when the number of merge candidates included in the merge candidate list is smaller than the maximum number of merges, the inter-region merge candidates included in the second inter-region motion information list may be added to the merge candidate list.

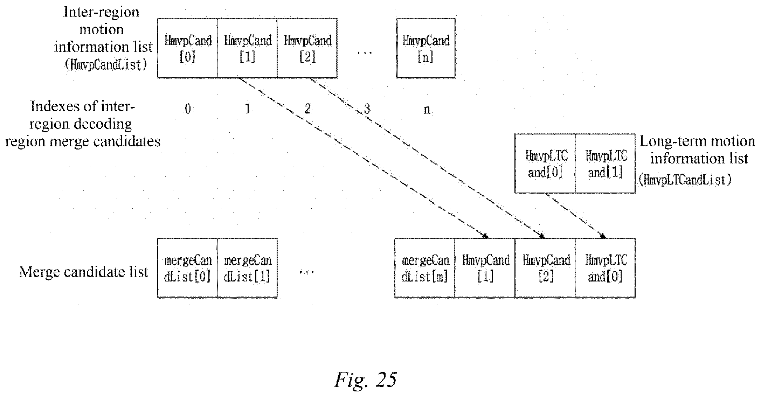

FIG. 25 is a view showing an example in which an inter-region merge candidate included in a long-term motion information list is added to a merge candidate list.

When the number of merge candidates included in the merge candidate list is smaller than the maximum number, the inter-region merge candidates included in the first inter-region motion information list HmvpCandList may be added to the merge candidate list. When the number of merge candidates included in the merge candidate list is smaller than the maximum number although the inter-region merge candidates included in the first inter-region motion information list are added to the merge candidate list, the inter-region merge candidates included in the long-term motion information list HmvpLTCandList may be added to the merge candidate list.

Table 2 shows a process of adding the inter-region merge candidates included in the long-term motion information list to the merge candidate list.

[Table 2]

| For each candidate in HMVPCandList with index HMVPLTIdx = 1.. numHMVPLTCand, the following ordered steps are repeated until combStop is equal to true |
| --- |
| - sameMotion is set to FALSE |
| - If hmvpStop is equal to FALSE and numCurrMergecand is less than (MaxNumMergeCand-1), hmvpLT is set to TRUE |
| - If HMVPLTCandList[NumLTHmvp-HMVPLTIdx] have the same motion vectors and the same reference indices with any mergeCandList[i] with I being 0.. numOrigMergeCand-1 and HasBeenPruned[i] equal to false, sameMotion is set to true |
| - If sameMotion is equal to false, mergeCandList[numCurrMergeCand++] is set to HMVPLTCandList[NumLTHmvp-HMVPLTIdx] |
| - If numCurrMergeCand is equal to (MaxNumMergeCand-1), hmvpLTStop is set to TRUE |

The inter-region merge candidate may be set to include additional information, in addition to motion information. For example, for the inter-region merge candidate, a size, a shape, or partition information of a block may be additionally stored. When the merge candidate list of the current block is constructed, only inter-region merge candidates having a size, a shape, or partition information the same as or similar to those of the current block are used among the inter-region merge candidates, or inter-region merge candidates having a size, a shape, or partition information the same as or similar to those of the current block may be added to the merge candidate list in the first place.

Alternatively, an inter-region motion information list may be generated for each of the size, shape, or partition information of a block. Among the plurality of inter-region motion information lists, a merge candidate list of the current block may be generated by using an inter-region motion information list corresponding to the shape, size, or partition information of the current block.

When the number of merge candidates included in the merge candidate list of the current block is smaller than the threshold value, the inter-region merge candidates included in the inter-region motion information list may be added to the merge candidate list. The addition process is performed in an ascending or descending order based on the index. For example, an inter-region merge candidate having the largest index may be first added to the merge candidate list.

When it is desired to add an inter-region merge candidate included in the inter-region motion information list to the merge candidate list, a redundancy check may be performed between the inter-region merge candidate and the merge candidates previously stored in the merge candidate list.

For example, Table 3 shows a process in which an inter-region merge candidate is added to the merge candidate list.

[Table 3]

| For each candidate in HMVPCandList with index HMVPIdx = 1.. numCheckedHMVPCand, the following ordered steps are repeated until combStop is equal to true |
| --- |
| - sameMotion is set to false |
| - If HMVPCandList[NumHmvp-HMVPIdx] have the same motion vectors and the same reference indices with any mergeCandList[i] with I being 0.. numOrigMergeCand-1 and HasBeenPruned[i] equal to false, sameMotion is set to true |
| - If sameMotion is equal to false, mergeCandList[numCurrMergeCand++] is set to HMVPCandList[NumHmvp-HMVPIdx] |
| - If numCurrMergeCand is equal to (MaxNumMergeCand-1), hmvpStop is set to TRUE |

The redundancy check may be performed only on some of the inter-region merge candidates included in the inter-region motion information list. For example, the redundancy check may be performed only on inter-region merge candidates having an index larger than a threshold value or smaller than a threshold value. Alternatively, the redundancy check may be performed only on N merge candidates having the largest index or N merge candidates having the smallest index.

Alternatively, the redundancy check may be performed only on some of the merge candidates previously stored in the merge candidate list. For example, the redundancy check may be performed only on a merge candidate having an index larger than a threshold value or smaller than a threshold value, or on a merge candidate derived from a block at a specific position. Here, the specific position may include at least one among a left neighboring block, a top neighboring block, a top-right neighboring block, and a bottom-left neighboring block of the current block.

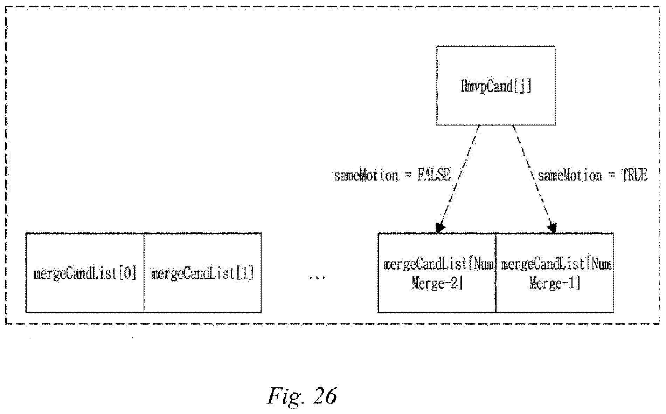

FIG. 26 is a view showing an example in which a redundancy check is performed only on some of merge candidates.

When it is desired to add the inter-region merge candidate HmvpCand[j] to the merge candidate list, a redundancy check may be performed on the inter-region merge candidate with two merge candidates mergeCandList[Num-Merge-2] and mergeCandList[NumMerge-1] having the largest indexes. Here, NumMerge may represent the number of spatial merge candidates and temporal merge candidates that are available.

Unlike the example shown in the drawing, when it is desired to add an inter-region merge candidate HmvpCand[j] to the merge candidate list, a redundancy check may be performed on the inter-region merge candidate with up to two merge candidates having the smallest index. For example, it is possible to check whether mergeCandList[0] and merge-CandList[1] are the same as HmvpCand[j]. Alternatively, a redundancy check may be performed only on merge candidates derived at a specific position. For example, the redundancy check may be performed on at least one among a merge candidate derived from a neighboring block positioned on the left side of the current block and a merge candidate derived from a neighboring block positioned on the top the current block. When a merge candidate derived at a specific position does not exist in the merge candidate list, an inter-region merge candidate may be added to the merge candidate list without having a redundancy check.

When a merge candidate the same as the first inter-region merge candidate is found and a redundancy check is performed on the second inter-region merge candidate, the redundancy check with a merge candidate the same as the first inter-region merge candidate may be omitted.

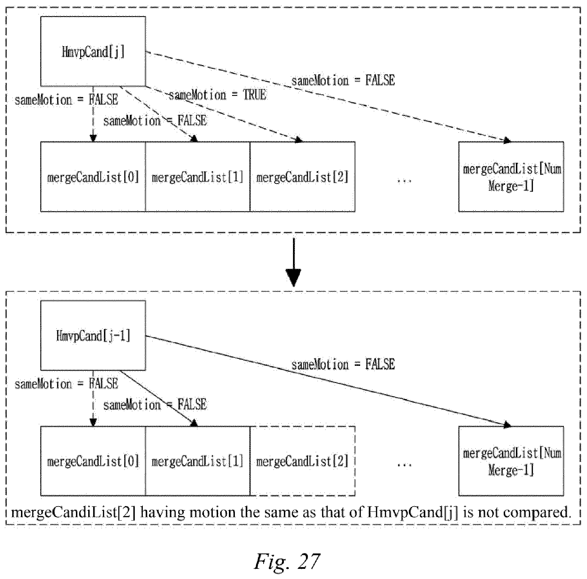

FIG. 27 is a view showing an example in which a redundancy check is omitted for a specific merge candidate.

When it is desired to add an inter-region merge candidate HmvpCand[i] having index i to the merge candidate list, a redundancy check is performed between the inter-region merge candidate and merge candidates previously stored in the merge candidate list. At this point, when a merge candidate mergeCandList[j] the same as the inter-region merge candidate HmvpCand[i] is found, the redundancy check may be performed between the inter-region merge candidate HmvpCand[i-1] having index i-1 and the merge candidates without adding the inter-region merge candidate HmvpCand[i] to the merge candidate list. At this point, the redundancy check between the inter-region merge candidate HmvpCand[i-1] and the merge candidate mergeCandList[j] may be omitted.

For example, in the example shown in FIG. 27, it is determined that HmvpCand[i] and mergeCandList[2] are the same. Accordingly, HmvpCand[i] is not added to the merge candidate list, and a redundancy check may be performed on HmvpCand[i-1]. At this point, the redundancy check between HvmpCand[i-1] and mergeCandList[2] may be omitted.

When the number of merge candidates included in the merge candidate list of the current block is smaller than the threshold value, at least one among a pairwise merge candidate and a zero-merge candidate may be further included, in addition to the inter-region merge candidate. The pairwise merge candidate means a merge candidate having an average value of motion vectors of two or more merge candidates as a motion vector, and the zero-merge candidate means a merge candidate having a motion vector of 0.

A merge candidate may be added to the merge candidate list of the current block in the following order.

Spatial merge candidate - Temporal merge candidate - Inter-region merge candidate - (Inter-region affine merge candidate) - Pairwise merge candidate - Zero-merge candidate

The spatial merge candidate means a merge candidate derived from at least one among a neighboring block and a non-neighboring block, and the temporal merge candidate means a merge candidate derived from a previous reference picture. The inter-region affine merge candidate represents an inter-region merge candidate derived from a block encoded/decoded with an affine motion model.

The inter-region motion information list may also be used in the advanced motion vector prediction mode. For example, when the number of motion vector prediction candidates included in a motion vector prediction candidate list of the current block is smaller than a threshold value, an inter-region merge candidate included in the inter-region motion information list may be set as a motion vector prediction candidate for the current block. Specifically, the motion vector of the inter-region merge candidate may be set as a motion vector prediction candidate.

When any one among the motion vector prediction candidates included in the motion vector prediction candidate list of the current block is selected, the selected candidate may be set as the motion vector predictor of the current block. Thereafter, after a motion vector residual coefficient of the current block is decoded, a motion vector of the current block may be obtained by adding the motion vector predictor and the motion vector residual coefficient.

The motion vector prediction candidate list of the current block may be configured in the following order.

Spatial motion vector prediction candidate - Temporal motion vector prediction candidate - Inter-region merge candidate - (Inter-region affine merge candidate) - Zero-motion vector prediction candidate

The spatial motion vector prediction candidate means a motion vector prediction candidate derived from at least one among a neighboring block and a non-neighboring block, and the temporal motion vector prediction candidate means a motion vector prediction candidate derived from a previous reference picture. The inter-region affine merge candidate represents an inter-region motion vector prediction candidate derived from a block encoded/decoded with the affine motion model. The zero-motion vector prediction candidate represents a candidate having a motion vector value of 0.

When a merge candidate of the current block is selected, the motion vector of the selected merge candidate is set as an initial motion vector, and motion compensation prediction may be performed for the current block using a motion vector derived by adding or subtracting an offset vector to or from the initial motion vector. Deriving a new motion vector by adding or subtracting an offset vector to or from a motion vector of a merge candidate may be defined as a merge motion difference coding method.

Information indicating whether or not to use the merge offset encoding method may be signaled through a bitstream. The information may be flag merge_offset_vector_flag of one bit. For example, when the value of merge_offset_vector_flag is 1, it indicates that the merge motion difference coding method is applied to the current block. When the merge motion difference coding method is applied to the current block, the motion vector of the current block may be derived by adding or subtracting an offset vector to or from the motion vector of the merge candidate. When the value of merge_offset_vector_flag of 0, it indicates that the merge motion difference coding method is not applied to the current block. When the merge offset encoding method is not applied, the motion vector of the merge candidate may be set as the motion vector of the current block.

The flag may be signaled only when the value of a skip flag indicating whether a skip mode is applied is true or when the value of a merge flag indicating whether a merge mode is applied is true. For example, when the value of skip_flag indicating whether the skip mode is applied to the current block is 1 or when the value of merge_flag indicating whether the merge mode is applied to the current block is 1, merge_offset_vector_flag may be encoded and signaled.

When it is determined that the merge offset encoding method is applied to the current block, at least one among information specifying any one among the merge candidates included in the merge candidate list, information indicating the magnitude of the offset vector, and information indicating the direction of the offset vector may be additionally signaled.

Information for determining the maximum number of merge candidates that the merge candidate list may include may be signaled through a bitstream. For example, the maximum number of merge candidates that the merge candidate list may include may be set to an integer number of 6 or smaller.

When it is determined that the merge offset encoding method is applied to the current block, only the maximum number of merge candidates set in advance may be set as the initial motion vector of the current block. That is, the number of merge candidates that can be used by the current block may be adaptively determined according to whether the merge offset encoding method is applied. For example, when the value of merge_offset_vector_flag is set to 0, the maximum number of merge candidates that can be used by the current block may be set to M, whereas when the value of merge_offset_vector_flag is set to 1, the maximum number of merge candidates that can be used by the current block may be set to N. Here, M denotes the maximum number of merge candidates that the merge candidate list may include, and N denotes a integer number equal to or smaller than M.

For example, when M is 6 and N is 2, two merge candidates having the smallest index among the merge candidates included in the merge candidate list may be set as being available for the current block. Accordingly, a motion vector of a merge candidate having an index value of 0 or a motion vector of a merge candidate having an index value of 1 may be set as an initial motion vector of the current block. When M and N are the same (e.g., when M and N are 2), all the merge candidates included in the merge candidate list may be set as being available for the current block.

Alternatively, whether a neighboring block may be used as a merge candidate may be determined based on whether the merge motion difference coding method is applied to the current block. For example, when the value of merge_offset_vector_flag is 1, at least one among a neighboring block adj acent to the top-right corner of the current block, a neighboring block adjacent to the top-left corner, and a neighboring block adjacent to the bottom-left corner may be set as being unavailable as a merge candidate. Accordingly, when the merge motion difference coding method is applied to the current block, the motion vector of at least one among a neighboring block adjacent to the top-right corner of the current block, a neighboring block adjacent to the top-left corner, and a neighboring block adjacent to the bottom-left corner may not be set as an initial motion vector. Alternatively, when the value of merge_offset_vector_flag is 1, a temporally neighboring block of the current block may be set as being unavailable as a merge candidate.

When the merge motion difference coding method is applied to the current block, it may be set not to use at least one among a pairwise merge candidate and a zero-merge candidate. Accordingly, when the value of merge_offset_vector_flag is 1, at least one among the pairwise merge candidate and the zero-merge candidate may not be added to the merge candidate list although the number of merge candidates included in the merge candidate list is smaller than the maximum number.

The motion vector of the merge candidate may be set as an initial motion vector of the current block. At this point, when the number of merge candidates that can be used by the current block is plural, information specifying any one among the plurality of merge candidates may be signaled through a bitstream. For example, when the maximum number of merge candidates that the merge candidate list may include is greater than 1, information merge_idx indicating any one among the plurality of merge candidates may be signaled through a bitstream. That is, in the merge offset encoding method, a merge candidate may be specified by information merge_idx for specifying any one among the plurality of merge candidates. The initial motion vector of the current block may be set as the motion vector of a merge candidate indicated by merge_idx.

On the other hand, when the number of merge candidates that can be used by the current block is 1, signaling of information for specifying a merge candidate may be omitted. For example, when the maximum number of merge candidates that the merge candidate list may include is not greater than 1, signaling of information merge _idx for specifying a merge candidate may be omitted. That is, in the merge offset encoding method, when one merge candidate is included in the merge candidate list, encoding of information merge _idx for specifying the merge candidate may be omitted, and the initial motion vector may be determined based on the merge candidate included in the merge candidate list. The motion vector of the merge candidate may be set as the initial motion vector of the current block.

As another example, after a merge candidate of the current block is determined, whether or not to apply the merge motion difference coding method to the current block may be determined. For example, when the maximum number of merge candidates that the merge candidate list may include is greater than 1, information merge_idx for specifying any one among the merge candidates may be signaled. After a merge candidate is selected based on merge_idx, merge_offset_vector_flag indicating whether or not the merge motion difference coding method is applied to the current block may be decoded. Table 4 is a view showing a syntax table according to the embodiment described above.

[Table 4]

| coding_unit (x0, y0, cbWidth, cbHeight, treeType) { | Descriptor |
|---|---|
| if (slice_type! = I) { | |
| **cu_skip_flag**[x0][y0] | ae(v) |
| if (cu_skip_flag[x0][y0] = = 0) | |
| **pred_mode_flag** | ae(v) |
| } | |
| if (CuPredMode [x0] [y0] = = MODE_INTRA) { | |
| if (treeType = = SINGLE_TREE \| \| treeType = = DUAL_TREE_LUMA) { | |
| **intralumampm_flag**[x0][y0] | |
| if (intra_luma_mpm_flag[x0][y0]) | |
| **intra_luma_mpm_idx**[x0][y0] | ae(v) |
| else | |
| **intra_tuma_mpm-_remainder**[x0][y0] | ae(v) |
| } | |
| if (treeType = = SINGLE_TREE ‖ treeType = = DUAL_TREE_CHROMA) | |
| **intra_chroma_pred_mode**[x0][y0] | ae(v) |
| } else { /* MODE_INTER */ | |
| if (cu_skip_flag[x0][y0] ) { | |
| if (merge_affine_flag[x0][y0] = = 0 && MaxNumMergeCand > 1) { | |
| **merge_idx[x0][y0]** | ae(v) |
| **merge_offset_vector_flag** | ae(v) |
| if (merge _idx < 2 && merge_offset_vector_flag) { | |

(continued)

| | |
|---|---|
| **distance_idx[x0][y0]** | ae(v) |
| **direction_idx[x0][y0]** | ae(v) |
| } | |
| } | |
| } else { | |
| **merge_flag**[x0][y0] | ae(v) |
| if (merge_flag[x0][y0] ) { | |
| if (merge_affine_flag[x0] [y0] = = 0 && MaxNumMergeCand > 1) { | |
| **merge_idx**[x0][y0] | ae(v) |
| **merge_offset_vector_flag** | ae(v) |
| if (merge_idx < 2 && merge_offset_vector_flag) { | |
| **distance_idx**[x0][y0] | ae(v) |
| **direction_idx[x0][y0]** | ae(v) |
| } | |
| } | |
| } else { | |
| if (slice_type = = B) | |
| **inter_pred_idc[x0]** [y0] | ae(v) |
| if (sps_affine_enabled_flag && cbWidth >= 16 && cbHeight >= 16) { | |
| **inter_affine_flag**[x0][y0] | ae(v) |
| if (sps_affine_type_flag && inter_affine_flag[x0][y0] ) | |
| **cu_affine_type_flag**[x0][y0] | ae(v) |
| } | |
| } | |

As another example, after a merge candidate of the current block is determined, whether or not to apply the merge motion difference coding method to the current block may be determined only when the index of the determined merge candidate is smaller than the maximum number of merge candidates that can be used when the merge motion difference coding method is applied. For example, only when the value of index information merge_idx is smaller than N, merge_offset_vector_flag indicating whether or not to apply the merge motion difference coding method to the current block may be encoded and signaled. When the value of the index information merge _idx is equal to or greater than N, encoding of merge_offset_vector _flag may be omitted. When encoding of merge_offset_vector_flag is omitted, it may be determined that the merge motion difference coding method is not applied to the current block.

Alternatively, after a merge candidate of the current block is determined, whether or not to apply the merge motion difference coding method to the current block may be determined considering whether the determined merge candidate has bidirectional motion information or unidirectional motion information. For example, merge_offset_vector_flag indicating whether or not to apply the merge motion difference coding method to the current block may be encoded and signaled only when the value of index information merge_idx is smaller than N and the merge candidate selected by the index information has bidirectional motion information. Alternatively, merge_offset_vector_flag indicating whether or not to apply the merge motion difference encoding method to the current block may be encoded and signalled only when the value of index information merge_idx is smaller than N and the merge candidate selected by the index information has unidirectional motion information.

Alternatively, whether or not to apply the merge motion difference encoding method may be determined based on at least one among the size of the current block, the shape of the current block, and whether the current block is in contact with the boundary of a coding tree unit. When at least one among the size of the current block, the shape of the current block, and whether the current block is in contact with the boundary of a coding tree unit does not satisfy a preset condition, encoding of merge_offset_vector_flag indicating whether or not to apply the merge motion difference encoding method to the current block may be omitted.

Not forming part of the invention: When a merge candidate is selected, the motion vector of the merge candidate may be set as the initial motion vector of the current block. Then, an offset vector may be determined by decoding information indicating the magnitude of the offset vector and information indicating the direction of the offset vector. The offset vector may have a horizontal direction component or a vertical direction component.

Information indicating the magnitude of the offset vector is index information indicating any one among motion magnitude candidates. Index information distance_idx indicating any one among the motion magnitude candidates may be signalled through a bitstream. Table 3 shows binarization of index information distance_idx and values of variable DistFromMergeMV for determining the magnitude of an offset vector according to distance_idx.

[Table 5]

| distance_idx[x][y] | binarization | DistFromMergeMV[x0][y0] |
|---|---|---|
| 0 | 0 | 1 |
| 1 | 10 | 2 |
| 2 | 110 | 4 |
| 3 | 1110 | 8 |
| 4 | 11110 | 16 |
| 5 | 111110 | 32 |
| 6 | 1111110 | 64 |
| 7 | 1111111 | 128 |

The magnitude of an offset vector may be derived by dividing variable DistFromMergeMV by a preset value. Equation 4 shows an example of determining the magnitude of an offset vector.

[Equation 5]

$$\text{abs offsetMV} = \text{DistFromMergeMV} \ll 2$$

According to Equation 4, a value obtained by dividing variable DistFromMegeMV by 4 or a value obtained by shifting variable DistFromMergeMV to the left by 2 may be set as the magnitude of an offset vector.

Not forming part of the invention: A larger number of motion magnitude candidates or a smaller number of motion magnitude candidates than the example shown in Table 3 may be used, or a range of motion vector offset size candidates may be set to be different from the example shown in Table 5. For example, the magnitude of the horizontal direction component or the vertical direction component of an offset vector may be set not to be greater than 2 sample distances. Table 4 shows binarization of index information distance idx and values of variable DistFromMergeMV for determining the magnitude of an offset vector according to distance_idx.

[Table 6] (not forming part of the invention)

| distance_idx[x][y] | binarization | DistFromMergeMV[x0][y0] |
|---|---|---|
| 0 | 0 | 1 |
| 1 | 10 | 2 |
| 2 | 110 | 4 |
| 3 | 111 | 8 |

Alternatively, a range of motion vector offset size candidates is set differently based on motion vector precision. When the motion vector precision for the current block is a fractional-pel, values of variable DistFromMergeMV corresponding to values of index information distance_idx is set to 1, 2, 4, 8, 16 or the like. Here, the fractional-pel includes at least one among 1/16 pel, octo-pel, quarter-pel, and half-pel. On the other hand, when the motion vector precision for the current block is an integer-pel, values of variable DistFromMergeMV corresponding to values of index information distance idx are set to 4, 8, 16, 32, 64, and the like. That is, a table referred to for the sake of determining variable DistFromMergeMV may be set differently according to the motion vector precision for the current block.

For example, when the motion vector precision of the current block or a merge candidate is a quarter-pel, variable DistFromMergeMV indicated by distance_idx may be derived using Table 3. On the other hand, when the motion vector precision of the current block or a merge candidate is an integer-pel, a value obtained by taking N times (e.g., 4 times) of the value of variable DistFromMergeMV indicated by distance idx in Table 3 may be derived as a value of variable DistFromMergeMV

Information for determining the motion vector precision may be signalled through a bitstream. For example, the information may be signalled at a sequence, picture, slice, or block level. Accordingly, the range of motion magnitude candidates may be set differently according to the information related to the motion vector precision signalled through a bitstream. Alternatively, the motion vector precision may be determined based on the merge candidate of the current block. For example, the motion vector precision of the current block may be set to be the same as the motion vector precision of the merge candidate.

Not forming part of the invention: Alternatively, information for determining a search range of the offset vector may be signalled through a bitstream. At least one among the number of motion magnitude candidates, a minimum numerical value among the motion magnitude candidates, and a maximum numerical value among the motion magnitude candidates may be determined based on the search range. For example, flag merge_offset_vector_flag for determining a search range of the offset vector may be signalled through a bitstream. The information may be signalled through a sequence header, a picture header, or a slice header.

For example, when the value of merge_offset_extend_range_flag is 0, the magnitude of the offset vector may be set not to exceed 2. Accordingly, the maximum numerical value of DistFromMergeMV may be set to 8. On the other hand, when the value of merge offset extend_range_flag is 1, the magnitude of the offset vector may be set not to exceed 32 sample distances. Accordingly, the maximum numerical value of DistFromMergeMV may be set to 128.

The magnitude of the offset vector may be determined using a flag indicating whether the magnitude of the offset vector is greater than a threshold value. For example, flag distance_flag indicating whether the magnitude of the offset vector is greater than a threshold value may be signalled through a bitstream. The threshold value may be 1, 2, 4, 8 or 16. For example, when distance flag is 1, it indicates that the magnitude of the offset vector is greater than 4. On the other hand, when distance flag is 0, it indicates that the magnitude of the offset vector is 4 or lower.

When the magnitude of the offset vector is greater than a threshold value, a difference value between the magnitude of the offset vector and the threshold value may be derived using index information distance_idx. Alternatively, when the magnitude of the offset vector is lower than or equal to the threshold value, the magnitude of the offset vector may be determined using index information distance_idx. Table 5 is a syntax table showing a process of encoding distance flag and distance_idx.

[Table 7]

| coding unit (x0, y0, cbWidth, cbHeight, tree Type) { | Descriptor |
|---|---|
| if (slice_type! = I) { | |
|    **cu_skip_flag** [x0][y0] | ae(v) |
|   if (cu_skip_flag[x0][y0] = = 0) | |
|    **pred_mode_flag** | ae(v) |
| } | |
| if (CuPredMode[x0][y0] = = MODE_INTRA) { | |
|   if (treeType = = SiNGLE_TREE ‖ treeType = = DUAL_TREE_LUMA) { | |
|   **intra_luma_mpm_flag** [x0][y0] | |
|   if (intra**_luma_mpm_**flag[x0][y0] ) | |
|    **intra_luma_mpm_idx** [x0][y0] | ae(v) |
|   else | |
|    **intra_luma_mpm_remainder** [x0][y0] | ae(v) |

(continued)

| | |
|---|---|
| } | |
| if (treeType = = SINGLE_TREE ‖ treeType = = DUAL_TREE_CHROMA) | |
| **intra chroma pred mode** [x0][y0] | ae(v) |
| } else { /* MODE_INTER */ | |
| if (cu_skip_flag[xO][yO]) { | |
| if (merge_affine_flag[x0][y0] = = 0 && MaxNumMergeCand > 1) { | |
| **merge_idx[x0][y0]** | ae(v) |
| **merge_offset_vector_flag** | ae(v) |
| if (merge_idx < 2 && merge_offset_vector_flag) { | |
| **distance_flag** [x0][y0] | ae(v) |
| **distance_idx** [x0][y0] | |
| **direction_idx** [x0][y0] | ae(v) |
| } | |
| ) | |
| } else { | |
| **merge_flag[**x0][y0] | ae(v) |
| if (merge_flag[x0][y0]) { | |
| if (merge_affine_flag[x0][y0] = = 0 && MaxNumMergeCand > 1) { | |
| **merge_idx** [x0][y0] | ae(v) |
| **merge_offset_vector_flag** | ae(v) |
| if (merge_idx < 2 && merge_offset_vector_flag) { | |
| **distance_flag** [x0][y0] | ae(v) |
| **distance_idx** [x0][y0] | ae(v) |
| **direction_idx** [x0][y0] | ae(v) |
| } | |
| } | |
| } else { | |
| if (slice type = = B) | |
| **inter_pred_idc** [x0][y0] | ae(v) |
| if (sps_affine_enabled_flag && cbWidth >= 16 && cbHeight >= 16) { | |
| **inter_affine_flag** [x0][y0] | ae(v) |
| if (sps_affine_type flag && inter_affine_flag[x0][y0]) | |
| **cu_affine_type_flag** [x0][y0] | ae(v) |
| } | |
| } | |

Equation 6 shows an example of deriving variable DistFromMergeMV for determining a magnitude of an offset vector using distance_flag and distance_idx.

[Equation 6]

$$DistFromMergeMV = N * distanc\_flag + 1 \ll distanc\_idx$$

In Equation 5, the value of distance flag may be set to 1 or 0. The value of distance_idx may be set to 1, 2, 4, 8, 16, 32, 64, 128 or the like. N denotes a coefficient determined by a threshold value. For example, when the threshold value is 4, N may be set to 16.

Information indicating the direction of the offset vector may be index information indicating any one among vector direction candidates. For example, index information direction_idx indicating any one among the vector direction candidates may be signalled through a bitstream. Table 6 shows binarization of index information direction_idx and directions of an offset vector according to direction_idx.

[Table 8]

| direction_idx[x] [y] | binarization | sign[x][y][0] | sign[x][y][1] |
|---|---|---|---|
| 0 | 00 | +1 | 0 |
| 1 | 01 | -1 | 0 |
| 2 | 10 | 0 | +1 |
| 3 | 11 | 0 | -1 |

In Table 8, sign[0] indicates the horizontal direction, and sign[1] indicates the vertical direction. +1 indicates that the value of the x component or the y component of the offset is plus (+), and -1 indicates that the value of the x component or the y component of the offset vector is minus (-).

[Equation 7]

$$offsetMV [0] = abs (offsetMV) * sign [0]$$
$$offsetMV [1] = abs (offsetMV) * sign [1]$$

In Equation 7, offsetMV[0] denotes the vertical direction component of the offset vector, and offsetMV[1] denotes the horizontal direction component of the offset vector.

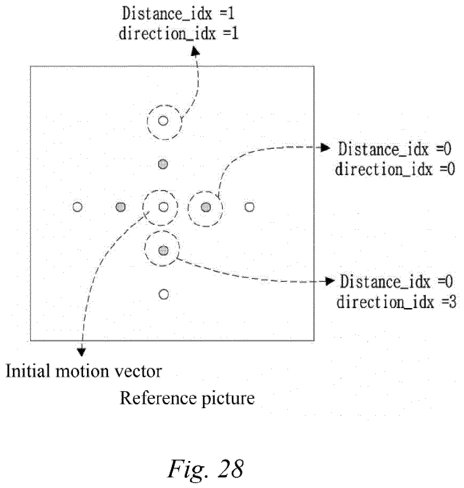

FIG. 28 is a view showing an offset vector according to values of distance_idx indicating a magnitude of an offset vector and direction_idx indicating a direction of the offset vector.

As shown in the example of FIG. 28, a magnitude and a direction of an offset vector may be determined according to values of distance_idx and direction_idx. The maximum magnitude of the offset vector may be set not to exceed a threshold value. Here, the threshold value may have a value predefined in the encoder and the decoder. For example, the threshold value may be 32 sample distances. Alternatively, the threshold value may be determined according to the magnitude of the initial motion vector. For example, the threshold value for the horizontal direction may be set based on the magnitude of the horizontal direction component of

More than four vector direction candidates may be defined. Tables 9 and 10 show examples in which eight vector direction candidates are defined.

[Table 9]

| direction_idx[x] [y] | binarization | sign[x] [y] [0] | sign[x][y][1] |
|---|---|---|---|
| 0 | 000 | +1 | 0 |
| 1 | 001 | -1 | 0 |
| 2 | 010 | 0 | +1 |
| 3 | 011 | 0 | -1 |
| 4 | 100 | +1 | +1 |
| 5 | 101 | +1 | -1 |

(continued)

| direction_idx[x] [y] | binarization | sign[x] [y] [0] | sign[x][y][1] |
|---|---|---|---|
| 6 | 110 | -1 | +1 |
| 7 | 111 | -1 | -1 |

[Table 10]

| direction_idx[x] [y] | binarization | sign[x] [y] [0] | sign[x][y][1] |
|---|---|---|---|
| 0 | 000 | +1 | 0 |
| 1 | 001 | -1 | 0 |
| 2 | 010 | 0 | +1 |
| 3 | 011 | 0 | -1 |
| 4 | 100 | +1/2 | +1/2 |
| 5 | 101 | +1/2 | -1/2 |
| 6 | 110 | -1/2 | +1/2 |
| 7 | 111 | -1/2 | -1/2 |

In Tables 9 and 10, when absolute values of sign[0] and sign[1] are greater than 0, it indicates that the offset vector is in a diagonal direction. When Table 9 is used, the magnitudes of the x-axis and y-axis components of the diagonal offset vector are set to abs(offsetMV), whereas when Table 10 is used, the magnitudes of the x-axis and y-axis components of the diagonal offset vector are set to abs(offsetMV/2).

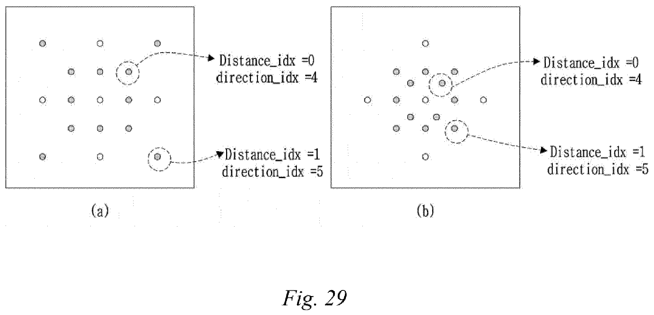

FIG. 29 is a view showing an offset vector according to values of distance _idx indicating a magnitude of an offset vector and direction_idx indicating a direction of the offset vector.

FIG. 29 (a) is a view showing an example when Table 9 is applied, and FIG. 29 (b) is a view showing an example when Table 10 is applied.

Information for determining at least one among the number and sizes of vector direction candidates may be signaled through a bitstream. For example, flag merge_offset_direction_range_flag for determining vector direction candidates may be signaled through a bitstream. The flag may be signaled at a sequence, picture, or slice level. For example, when the value of the flag is 0, four vector direction candidates exemplified in Table 8 may be used. On the other hand, when the value of the flag is 1, eight vector direction candidates exemplified in Table 9 or Table 10 may be used.

Alternatively, at least one among the number and sizes of vector direction candidates may be determined based on the magnitude of the offset vector. For example, when the value of variable DistFromMergeMV for determining the magnitude of the offset vector is equal to or smaller than a threshold value, eight vector direction candidates exemplified in Table 9 or Table 10 may be used. On the other hand, when the value of variable DistFromMergeMV is greater than the threshold value, four vector direction candidates exemplified in Table 8 may be used.

Alternatively, at least one among the number and sizes of vector direction candidates may be determined based on value MVx of the x component and value MVy of the y component of the initial motion vector. For example, when the difference between MVx and MVy or the absolute value of the difference is smaller than or equal to a threshold value, eight vector direction candidates exemplified in Table 9 or Table 10 may be used. On the other hand, when the difference between MVx and MVy or the absolute value of the difference is greater than the threshold value, four vector direction candidates exemplified in Table 8 may be used.

The motion vector of the current block may be derived by adding an offset vector to the initial motion vector. Equation 10 shows an example of determining a motion vector of the current block.

【Equation 10】

$$mvL0[0] = mergeMVL0[0] + offsetMVL0[0]$$
$$mvL0[1] = mergeMVL0[1] + offsetMVL0[1]$$

$$mvL1[0] = mergeMVL1[0] + offsetMVL1[0]$$
$$mvL1[1] = mergeMVL1[1] + offsetMVL1[1]$$

In Equation 10, mvL0 denotes L0 motion vector of the current block, and mvL1 denotes L1 motion vector of the current block. mergeMVL0 denotes L0 initial motion vector of the current block (i.e., L0 motion vector of a merge candidate), and mergeMVL1 denotes L1 initial motion vector of the current block. [0] indicates the horizontal direction component of the motion vector, and [1] indicates the vertical direction component of the motion vector.

Even when inter prediction is performed on each of subunits after a coding block is partitioned into a plurality of subunits, the merge motion difference coding method may be applied. Here, performing inter prediction by the unit of subunit may include at least one among an Advanced Temporal Motion Vector Prediction (ATMVP) technique, a Spatial Temporal Motion Vector Prediction (STMVP) technique, and a triangular partitioning technique.

For example, an initial motion vector may be derived as follows in the ATMVP method.

First, an initial shift vector may be derived using a motion vector of a merge candidate derived from a neighboring block adjacent to a coding block. In addition, a shift block of a subblock included in the coding block may be derived using the initial shift vector. Equation 11 shows the position of the shift block.

【Equation 11】

$$(xColSb, yColSb) = (xSb + shVector[0] \gg 4, ySb + shVector[1] \gg 4)$$

In Equation 11, (xColSb, yColSb) denotes the position of the top-left sample of a shift block, and (xSb, ySb) denotes the position of the top-left sample of a subblock. shVector denotes a shift vector.

When a shift block is determined, the motion vector of a collocated block at the position the same as that of the shift block in the collocated picture may be set as the motion vector of the subblock. That is, the motion vector of a collocated block including a sample at the position of (xColSb, yColSb) in the collocated block may be set as the motion vector of a subblock including a sample at the position of (xSb, ySb).

When the triangular partitioning technique is applied, a coding block may be partitioned into triangular subunits. For example, a coding block may be partitioned into two subunits by a diagonal line connecting the top-left and bottom-right corners of the coding block or a diagonal line connecting the top-right and bottom-left corners of the coding block.

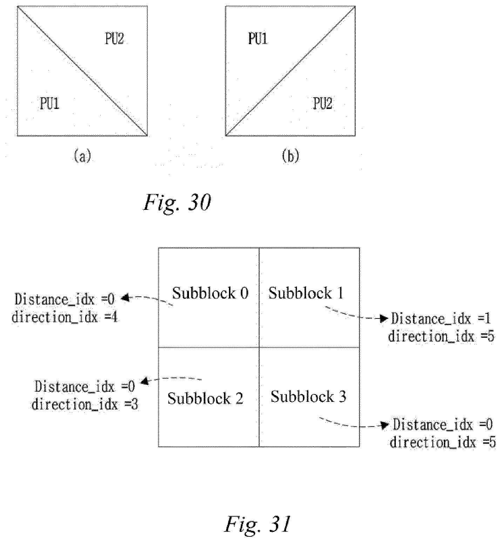

FIG. 30 is a view showing partitioning patterns of a coding block when a triangular partitioning technique is applied.

Motion information of each of the triangular subunits may be specified by a merge candidate. To this end, index information indicating any one among the merge candidates may be signaled for each subunit. For example, index information merge_1st_idx of a first subunit may specify the merge candidate of the first subunit, and index information merge_2nd_idx of a second subunit may specify the merge candidate of the second subunit.

The initial motion vector of each of the subunits may be individually determined. For example, when an affine motion model is applied to a coding block, affine vectors of subblocks derived from affine seed vectors of the coding block may be set as initial motion vectors of the subblocks. The motion vector of each subblock may be derived by adding or subtracting an offset vector to or from the initial motion vector.

When the merge motion difference coding method is applied to a coding block partitioned into a plurality of subunits, the plurality of subunits may be set to use the same offset vector. That is, the initial motion vector of each of the plurality of subunits may be changed using the same offset vector.

Alternatively, a coding block is partitioned into a plurality of subunits, and an offset vector of each subunit may be individually determined. Accordingly, the offset vector of at least one among the subunits may be set to be different from offset vectors of other subunits.

FIG. 31 is a view showing an example in which offset vectors of each of subunits are set differently.

As shown in the example of FIG. 31, information distance_idx indicating the magnitude of the offset vector and direction_idx indicating the direction of the offset vector may be encoded and signaled for each subunit.

Alternatively, the magnitude of the offset vector may be set to be the same for all subunits, and the direction of the offset vector may be set individually for the subunits. For example, it may be set to share the value of distance_idx signaled at the coding level among the subunits, and direction_idx may be encoded and signaled for each subunit.

Alternatively, the direction of the offset vector may be set to be the same for all subunits, and the magnitude of the offset vector may be set individually for the subunits. For example, it may be set to share the value of direction_idx signaled at the coding level among the subunits, and distance_idx may be encoded and signaled for each subunit.

The merge motion difference coding method may be applied only to some of a plurality of subunits generated by partitioning a coding block. For example, when the current block is partitioned into a first subunit and a second subunit, the motion vector of the first subunit may be set to be the same as the motion vector of the merge candidate, and the motion vector of the second subunit may be derived by adding an offset vector to the motion vector of the merge candidate.

Instead of signaling information for determining an offset vector, the decoder may derive the offset vector. Specifically, the offset vector may be derived using an average value for horizontal direction gradients and an average value for vertical direction gradients of prediction samples included in the subblock.

Here, the gradient may be derived based on a difference between a reconstructed sample corresponding to a prediction sample in a reference picture and a neighboring sample adjacent to the reconstructed sample. For example, the horizontal direction gradient may indicate a difference between a reconstructed sample and a reconstructed sample neighboring on the left and/or right side, and the vertical direction gradient may indicate a difference between a reconstructed sample and a reconstructed sample neighboring on the top and/or bottom side.

Among the merge candidates included in the merge candidate list, a merge candidate having a motion vector derived by adding or subtracting an offset vector to or from the motion vector of a reference merge candidate among the merge candidates included in the merge candidate list may be added to the merge candidate list. A merge candidate having a motion vector derived by adding or subtracting an offset vector to or from the motion vector of a reference merge candidate may be referred to as a refine merge candidate.

Remaining motion information excluding the motion vector of the refine merge candidate may be set to be the same as that of the reference merge candidate.

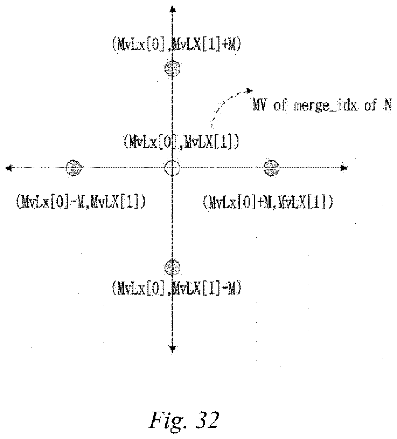

FIG. 32 is a view showing motion vector candidates that a refine merge candidate may take.

When the motion vector of a reference merge candidate is (MvLX[0], MvLX[1]), the motion vector of the refine merge candidate may be derived by adding or subtracting an offset to or from at least one among the x component and the y component of the motion vector of the reference merge candidate. For example, the motion vector of the refine merge candidate may be set to (MvLX[0]+M, MvLX[1]), (MvLX[0]-M, MvLX[1]), (MvLX[0], MvLX[1]+M) or (MvLX[0], MvLX[1]-M). M denotes the magnitude of the offset vector.

The reference merge candidate may be a merge candidate having a predefined index value in the merge candidate list. For example, a merge candidate having the smallest index value (i.e., a merge candidate having an index value of 0) or a merge candidate having the largest index value among the merge candidates included in the merge candidate list may be set as a reference merge candidate. Alternatively, an inter-region merge candidate having the smallest index value or an inter-region merge candidate having the largest index value in the inter-region motion information list may be set as a reference merge candidate.

Alternatively, a merge candidate having the smallest index value among the merge candidates having bidirectional motion information may be set as a reference merge candidate. That is, when the candidate blocks are sequentially searched, a bidirectional merge candidate found first may be set as a reference merge candidate.

A basic merge candidate may be selected based on the size of the current block, the shape of the current block, or whether the current block is in contact with the boundary of a coding tree unit. For example, when the current block is a square shape or the current block is a non-square shape of which the height is greater than the width, a merge candidate having an index of 0 or a merge candidate derived from a neighboring block positioned on the top of the current block may be set as a reference merge candidate. When the current block is a non-square shape of which the width is greater than the height, a merge candidate having an index of 1 or a merge candidate derived from a neighboring block positioned on the left side of the current block may be set as a reference merge candidate.

Alternatively, information specifying the reference merge candidate may be signaled through a bitstream. The information may be index information specifying any one among the merge candidates included in the merge candidate list.

Information indicating whether or not to use the refine merge candidate may be signaled through a bitstream. The information may be a 1-bit flag. When the value of the flag is 1, a refine merge candidate generated based on the reference merge candidate may be added to the merge candidate list. On the other hand, when the value of the flag is 0, the merge candidate list may not include the refine merge candidate.

Alternatively, when the number of merge candidates previously added to the merge candidate list is smaller than the maximum number of merge candidates that the merge candidate list may include, the refine merge candidate may be added to the merge candidate list. Here, the previously added merge candidates may include at least one among a spatial merge candidate, a temporal merge candidate, an inter-region merge candidate, and a pairwise merge candidate. For example, when the number of at least one among the spatial merge candidates, the temporal merge candidates, and the inter-region merge candidates included in the merge candidate list is smaller than or equal to a threshold value, the refine merge candidate may be added to the merge candidate list.

Alternatively, when the number of merge candidates previously added to the merge candidate list is greater than or equal to a threshold value, the refine merge candidate may be used.

The maximum number of merge candidates that the merge candidate list may include may be set differently according to whether or not the refine merge candidate is used. For example, when it is set not to use the refine merge candidate, the maximum number of merge candidates that the merge candidate list may include may be set to N, whereas when it is set to use the refine merge candidate, the maximum number of merge candidates that the merge candidate list may include may be set to N + n.

A refine merge candidate may have an index larger than those of merge candidates previously added to the merge candidate list. For example, Table 11 shows an example of configuring a merge candidate list.

[Table 11]

| |
|---|
| mergeCand[0] |
| mergeCand[1] |
| mergeCand[2] |
| mergeCand[3] |
| mergeCand[4] |
| mergeCand[5] |
| mergeCand[6]: Refine merge candidate of which motion vector is (mvLx[0]+M, mvLx[1]) |
| mergeCand[7]: Refine merge candidate of which motion vector is (mvLx[0]-M, mvLx[1]) |
| mergeCand[8]: Refine merge candidate of which motion vector is (mvLx[0], mvLx[1]+M) |
| mergeCand[9]: Refine merge candidate of which motion vector is (mvLx[0], mvLx[1]-M) |

In Table 11, mergeCand[X] denotes a merge candidate having an index of X. mvLx[0] denotes the x component motion vector of the reference merge candidate, and mvLx[1] denotes the y component motion vector of the reference merge candidate. For example, when the reference merge candidate is mergeCand[0], mvLx[0] and mvLx[1] may indicates the motion vector of mergeCand[0].

The magnitude M of the offset vector may be predefined in the encoder and the decoder. For example, the magnitude M of the offset vector may be set to an integer smaller than or equal to 4, such as 1 or 4.

Alternatively, information for determining an offset vector may be signaled through a bitstream. The information may be signaled at a sequence, picture, slice, or block level. For example, the offset vector may be determined using at least one among information distance_idx for determining the magnitude of the offset vector and information direction_idx for determining the direction of the offset vector described above.

As shown in the example of Table 11, at least one refine merge candidate derived based on the reference merge candidate may be added to the merge candidate list. When there is a merge candidate having motion information the same as that of the refine merge candidate among the previously added merge candidates, the refine merge candidate may not be added to the merge candidate list. For example, when a refine merge candidate derived based on the reference merge candidate mergeCand[0] is the same as any one among the merge candidates of mergeCand[1] to mergeCand[5], the refine merge candidate may not be added to the merge candidate list.

Alternatively, when there is a merge candidate having motion information the same as that of the refine merge candidate, the refine merge candidate may be re-derived by changing the offset vector or re-setting a merge candidate having motion information the same as that of the refine merge candidate as the refine merge candidate. For example, when the motion information of the refine merge candidate mergeCand[6] derived based on the reference merge candidate mergeCand[0] is the same as that of the merge candidate mergeCand[2], the motion vector of the refine merge candidate mergeCand[6] may be changed to a value obtained by adding or subtracting an offset vector to or from the motion vector of the merge candidate [2]. For example, the motion vector of mergeCand[6] may be changed from (mergeCand[0]_mxLx[0]+M, mergeCand[0]_mvLx[1]) to (mergeCand[2]_mxLx[0]+M, mergeCand[2]_mvLx[1]). Here, mergeCand[X]_mvLx denotes a motion vector of a merge candidate having an index of X.

As another example, an offset vector may be determined using a merge refinement offset list including at least one merge offset candidate. When a merge candidate specified by the index information of the current block is a reference merge candidate, the offset vector may be determined using the merge refinement offset list. In addition, the motion vector of the current block may be derived by adding or subtracting the offset vector to or from the motion vector of the merge candidate. The reference merge candidate may be a merge candidate having a predefined index value in the merge candidate list. For example, among the merge candidates included in the merge candidate list, a merge candidate having the smallest index value (i.e., a merge candidate having an index value of 0) or a merge candidate having the largest index value may be set as the reference merge candidate. Alternatively, an inter-region merge candidate having the smallest index value or an inter-region merge candidate having the largest index value in the inter-region motion information list may be set as the reference merge candidate.

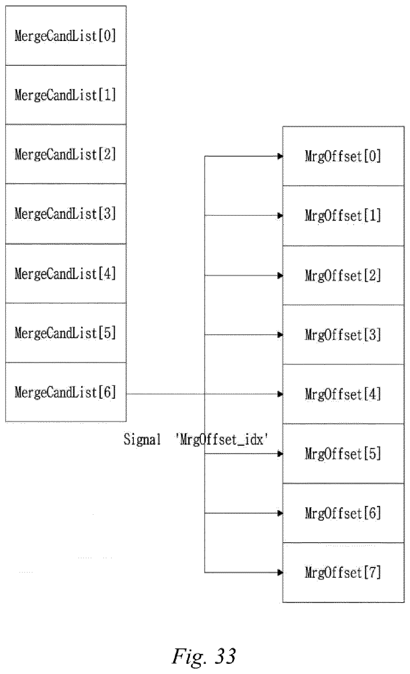

FIG. 33 is a view showing the configuration of a merge refinement offset list.

In FIG. 33, it is assumed that the reference merge candidate is a merge candidate having an index of 6.

When the index of a merge candidate specified by index information merge_idx indicating any one among the merge candidates is not 6, the motion vector of the merge candidate may be set as the motion vector of the current block.

On the other hand, when the index of a merge candidate specified by index information merge _idx is 6, an offset vector may be derived using the merge refinement offset list. Index information MrgOffset_idx specifying any one among the merge offset candidates included in the merge refinement offset list may be signaled through a bitstream.

When an offset vector is specified, the motion vector of the current block may be derived by adding or subtracting the offset vector to or from the motion vector of the reference merge candidate.

The merge refinement offset list may include at least one merge offset candidate. For example, the number of merge offset candidates that the merge refinement offset list includes may be 4, 8 or 16.

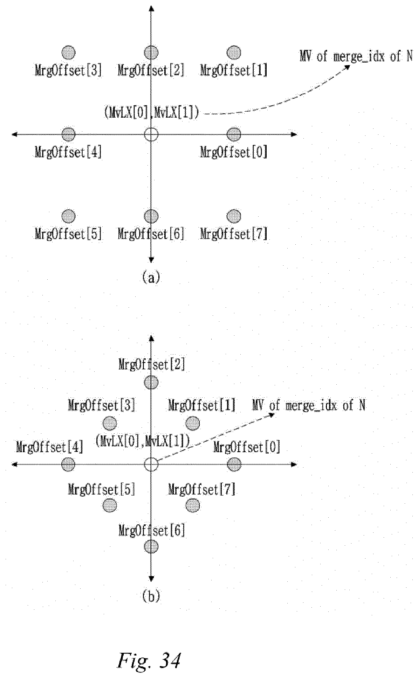

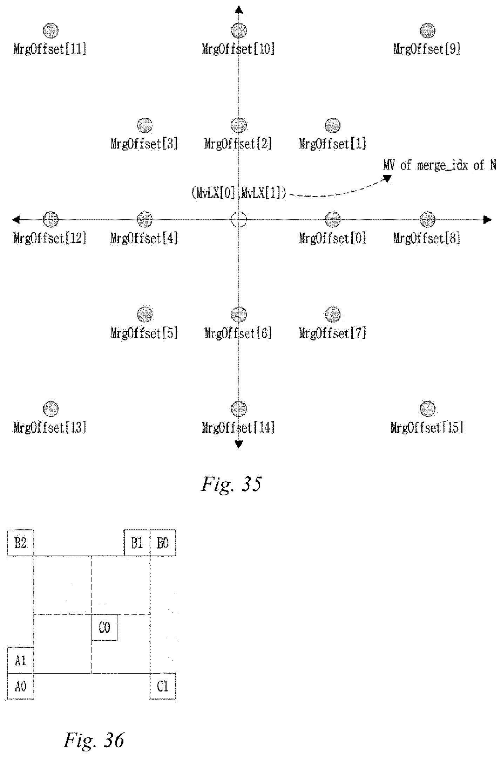

FIG. 34 and 35 are views showing offset vectors specified by merge offset candidates.

FIG. 34 shows an example in which the number of merge offset candidates is 8, and FIG. 35 shows an example in which the number of merge offset candidates is 16.

As shown in the example of FIG. 34 (a), offset vectors indicated by the merge offset candidates may be set so that the absolute value of the motion vector of the horizontal direction and/or the absolute value of the motion vector of the vertical direction may have a fixed value. Alternatively, as shown in the example of FIG. 35, offset vectors indicated by merge offset candidates having an index smaller than a threshold value among the merge offset candidates may be set so that the absolute value of the motion vector of the horizontal direction and/or the absolute value of the motion vector of the vertical direction may have a first value, and offset vectors indicated by the other merge offset candidates may be set so that the absolute value of the motion vector of the horizontal direction and/or the absolute value of the motion vector of the vertical direction may have a second value.

Alternatively, as shown in FIG. 34 (b), offset vectors indicated by the merge offset candidates may be set so that the sum of the absolute value of the motion vector of the horizontal direction and the absolute value of the motion vector of the vertical direction may have a fixed value.

A plurality of reference merge candidates may be set. For example, among the merge candidates included in the merge candidate list, two merge candidates having the smallest index may be set as reference merge candidates. Accordingly, when the index of a merge candidate specified by index information merge_idx is 0 or 1, an offset vector may be derived using the merge refinement offset list. Alternatively, a merge candidate having the smallest index among the merge candidates included in the merge candidate list and a merge candidate having the largest index among the merge candidates included in the inter-region merge candidate list may be set as reference merge candidates.

In the advanced motion vector prediction mode, the motion vector of the current block may be derived by adding a motion difference vector to a motion prediction vector. The motion prediction vector of the current block may be determined based on a motion vector prediction candidate list including at least one motion prediction vector candidate. For example, any one among the motion prediction vector candidates may be set as the motion prediction vector of the current block.

The motion vector prediction candidate may be derived based on at least one among a spatially neighboring block of the current block and a temporally neighboring block of the current block.

FIG. 36 is a view showing candidate blocks used for deriving motion vector prediction candidates.

The spatially neighboring block may include top neighboring blocks positioned on the top of the current block and left neighboring blocks positioned on the left side of the current block. The top neighboring blocks may include at least one among block B0 including a sample at the position of (xCb+CbW, yCb-1), block B1 including a sample at the position of (xCb+CbW-1, yCb-1), block B2 including a sample at the position of (xCb-1, yCb-1), and block B3 including a sample at the position of (xCb, yCb-1). Here, (xCb, yCb) denotes the position of the top-left sample of the current block, and CbW denotes the width of the current block. The left neighboring blocks may include at least one among block A0 including a sample at the position of (xCb-1, yCb+CbH), block A1 including a sample at the position of (xCb-1, yCb+CbH-1), and block A2 including a sample at the position of (xCb-1, yCb) Here, CbH denotes the height of the current block.

The temporally neighboring block may include at least one among block C0 including a sample at the center of a block having a position and a size the same as those of the current block in a collocated block, and block C1 including a sample adjacent to the bottom-right corner of the block.

The maximum number of motion vector prediction candidates that the motion vector prediction candidate list may include may be two. The sequence of deriving the motion vector prediction candidates is as described below.

1. When at least one among left neighboring block A0 and left neighboring block A1 is available, the motion vector of the available block is set as a motion vector prediction candidate.
2. When at least one among top neighboring block B0, top neighboring block B1, and top neighboring block B2 is available, the motion vector of the available block is set as a motion vector prediction candidate.
3. When a temporally neighboring block is available, a temporal motion vector is set as a motion vector prediction candidate.
4. A zero-motion vector is set as a motion vector prediction candidate.

Alternatively, when the number of motion vector prediction candidates derived in the sequence of 1 to 3 is smaller than two, a motion vector included in the inter-region motion information list may be set as a motion vector prediction candidate. When the inter-region motion information list is available, motion vector prediction candidates may be derived in the sequence described below.

1. When at least one among the left neighboring block A0 and the left neighboring block A1 is available, the motion vector of the available block is set as a motion vector prediction candidate.
2. When at least one among the top neighboring block B0, the top neighboring block B1, and the top neighboring block B2 is available, the motion vector of the available block is set as a motion vector prediction candidate.
3. When a temporally neighboring block is available, a temporal motion vector is set as a motion vector prediction candidate.
4. A motion vector included in the inter-region motion information list is set as a motion vector prediction candidate.
5. A zero-motion vector is set as a motion vector prediction candidate.

A motion vector prediction candidate having a motion vector derived by adding or subtracting an offset vector to or from a motion vector of a reference motion vector prediction candidate may be added to the motion vector prediction candidate list. The motion vector prediction candidate having a motion vector derived by adding or subtracting an offset vector to or from a motion vector of a reference motion vector prediction candidate may be referred to as a refine motion vector prediction candidate.

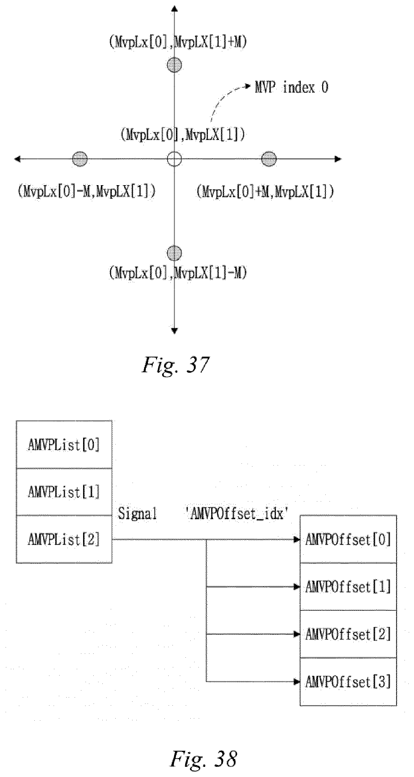

FIG. 37 is a view showing motion vector candidates that may be set as a refine motion vector prediction candidate.

When the motion vector of the reference motion vector prediction candidate is (MvpLX[0], MvpLX[1]), the motion vector of the refine motion vector prediction candidate may be derived by adding or subtracting an offset to at least one among the x component and the y component of the motion vector of the reference motion vector prediction candidate. For example, the motion vector of the refine motion vector prediction candidate may be set as (MvpLX[0]+M, MvpLX[1]), (MvpLX[0]-M, MvpLX[1]), (MvpLX[0], MvpLX[1]+M) or (MvpLX[0], MvpLX[1]-M). M denotes the magnitude of the offset vector.

The magnitude M of the offset vector may be predefined in the encoder and the decoder. For example, the magnitude M of the offset vector may be set to an integer smaller than or equal to 4, such as 1 or 4.

Alternatively, information for determining an offset vector may be signaled through a bitstream. The information may be signaled at a sequence, picture, slice, or block level. For example, the offset vector may be determined using at least one among information distance_idx for determining the magnitude of the offset vector and information direction_idx for determining the direction of the offset vector described above.

The reference motion vector prediction candidate may be a motion vector prediction candidate having a predefined index value in the motion vector prediction candidate list. For example, among the motion vector prediction candidates included in the motion vector prediction candidate list, a motion vector prediction candidate having an index value of 0 or a motion vector prediction candidate having an index value of 1 may be set as the reference motion vector prediction candidate.

As another example, an offset vector may be determined using a merge refinement offset list including at least one prediction vector offset candidate. When a motion vector prediction candidate specified by the index information of the current block is a reference motion vector prediction candidate, the offset vector may be determined using a prediction vector refinement offset list. In addition, the motion prediction vector of the current block may be derived by adding or subtracting the offset vector to or from the motion vector of the motion vector prediction candidate. The reference motion vector prediction candidate may be a motion vector prediction candidate having a predefined index value in the motion vector prediction candidate list. For example, among the motion vector prediction candidates included in the motion vector prediction candidate list, a motion vector prediction candidate having the smallest index value or a motion vector prediction candidate having the largest index value may be set as the reference motion vector prediction candidate.

When the offset vector is calculated using the prediction vector offset refinement list, the maximum number of prediction vector candidates that the prediction vector candidate list may include may be set to a value greater than 2.

FIG. 38 is a view showing the configuration of a prediction vector refinement offset list.

In FIG. 38, it is assumed that the reference prediction vector candidate is a prediction vector candidate having an index of 2.

When the index of a prediction vector candidate specified by index information AMVPcand_idx indicating any one among the prediction vector candidates is not 2, the motion vector of the prediction vector candidate may be set as the motion prediction vector of the current block.

On the other hand, when the index of a prediction vector candidate specified by index information AMVPcand _idx is 2, the offset vector may be derived using the prediction vector refinement offset list. Index information AMVPOffset_idx specifying any one among the prediction vector offset candidates included in the prediction vector refinement offset list may be signaled through a bitstream.

When an offset vector is specified, the motion prediction vector of the current block may be derived by adding or subtracting the offset vector to or from the motion vector of the reference prediction vector candidate.

Even when the coding block is encoded based on the affine motion model, a refine technique of a motion vector may be used. For example, when the affine advanced motion vector prediction mode is applied, affine seed vectors of the coding block may be derived by adding an affine seed difference vector to an affine seed prediction vector. Here, the affine seed prediction vector may be derived based on an affine seed vector of a spatially neighboring block or a temporally neighboring block of the coding block. The affine seed difference vector may be determined based on information signaled from a bitstream. At this point, the same affine seed difference vector may be applied to all control points. Alternatively, information for determining the affine seed vector may be signaled for each control point.

When an affine vector for a subblock is derived based on the affine seed vectors of the coding block, the affine vector may be set as an initial motion vector, and then an offset vector may be derived. The motion vector of each subblock may be derived by adding or subtracting the offset vector to or from the initial motion vector.

Instead of signaling information for determining an offset vector, the decoder may derive the offset vector. Specifically, the offset vector may be derived using an average value for horizontal direction gradients and an average value for vertical direction gradients of prediction samples included in the subblock.

Intra prediction is for predicting a current block using reconstructed samples that have been encoded/decoded in the neighborhood of the current block. At this point, samples reconstructed before an in-loop filter is applied may be used for intra prediction of the current block.

The intra prediction technique includes matrix-based intra prediction, and general intra prediction considering directionality with respect to neighboring reconstructed samples. Information indicating the intra prediction technique of the current block may be signaled through a bitstream. The information may be a 1-bit flag. Alternatively, the intra prediction technique of the current block may be determined based on at least one among the location, the size, and the shape of the current block, or based on an intra prediction technique of a neighboring block. For example, when the current block exists across a picture boundary, it may be set not to apply the matrix-based intra prediction intra prediction to the current block.

The matrix-based intra prediction intra prediction is a method of acquiring a prediction block of the current block by an encoder and a decoder based on a matrix product between a previously stored matrix and reconstructed samples in the neighborhood of the current block. Information for specifying any one among a plurality of previously stored matrixes may be signaled through a bitstream. The decoder may determine a matrix for intra prediction of the current block based on the information and the size of the current block.

The general intra prediction is a method of acquiring a prediction block for the current block based on a non-angular intra prediction mode or an angular intra prediction mode.

A derived residual picture may be derived by subtracting a prediction video from an original video. At this point, when the residual video is changed to the frequency domain, subjective video quality of the video is not significantly lowered although the high-frequency components among the frequency components are removed. Accordingly, when values of the high-frequency components are converted to be small or the values of the high-frequency components are set to 0, there is an effect of increasing the compression efficiency without generating significant visual distortion. By reflecting this characteristic, the current block may be transformed to decompose a residual video into two-dimensional frequency components. The transform may be performed using a transform technique such as Discrete Cosine Transform (DCT) or Discrete Sine Transform (DST).

After the current block is transformed using DCT or DST, the transformed current block may be transformed again. At this point, the transform based on DCT or DST may be defined as a first transform, and transforming again a block to which the first transform is applied may be defined as a second transform.

The first transform may be performed using any one among a plurality of transform core candidates. For example, the first transform may be performed using any one among DCT2, DCT8, or DCT7.

Different transform cores may be used for the horizontal direction and the vertical direction. Information indicating combination of a transform core of the horizontal direction and a transform core of the vertical direction may be signaled through a bitstream.

Units for performing the first transform and the second transform may be different. For example, the first transform may be performed on an 8 × 8 block, and the second transform may be performed on a subblock of a 4 × 4 size among the transformed 8 × 8 block. At this point, the transform coefficients of the residual regions that has not been performed the second transform may be set to 0.

Alternatively, the first transform may be performed on a 4 × 4 block, and the second transform may be performed on a region of an 8 × 8 size including the transformed 4 × 4 block.

Information indicating whether or not the second transform has been performed may be signaled through a bitstream.

The decoder may perform an inverse transform of the second transform (a second inverse transform), and may perform an inverse transform of the first transform (a first inverse transform) on a result of the inverse transform. As a result of performing the second inverse transform and the first inverse transform, residual signals for the current block may be acquired.

Quantization is for reducing the energy of a block, and the quantization process includes a process of dividing a transform coefficient by a specific constant value. The constant value may be derived by a quantization parameter, and the quantization parameter may be defined as a value between 1 and 63.

When the encoder performs transform and quantization, the decoder may acquire a residual block through inverse quantization and inverse transform. The decoder may acquire a reconstructed block for the current block by adding a prediction block and the residual block.

When a reconstructed block of the current block is acquired, loss of information occurring in the quantization and encoding process may be reduced through in-loop filtering. An in-loop filter may include at least one among a deblocking filter, a sample adaptive offset filter (SAO), and an adaptive loop filter (ALF).

Each of the components (e.g., units, modules, etc.) constituting the block diagram in the embodiments described above may be implemented as a hardware device or software, or a plurality of components may be combined to be implemented as a single hardware device or software. The embodiments described above may be implemented in the form of program commands that can be executed through various computer components and recorded in a computer-readable recording medium. The computer-readable recording medium may include program commands, data files, data structures and the like independently or in combination. The computer-readable recording medium includes, for example, magnetic media such as a hard disk, a floppy disk and a magnetic tape, optical recording media such as a CD-ROM and a DVD, magneto-optical media such as a floptical disk, and hardware devices specially configured to store and execute program commands, such as a ROM, a RAM, a flash memory and the like. The hardware devices described above can be configured to operate using one or more software modules to perform the process of the present disclosure, and vice versa.

The present disclosure can be applied to an electronic device that encodes and decodes a video.

**Claims**

1. A video decoding method comprising the steps of:

   determining whether a merge motion difference encoding method is applied to a current block;
   generating a merge candidate list for the current block;
   specifying a merge candidate for the current block based on the merge candidate list; and
   deriving a motion vector for the current block based on the merge candidate, wherein
   when the merge motion difference encoding method is applied to the current block, the motion vector of the current block is derived by adding an offset vector to a motion vector of the merge candidate,
   when the maximum number of merge candidates that the merge candidate list may include is plural, the merge candidate of the current block is selected based on index information decoded from a bitstream indicating one among the merge candidates, and
   when the maximum number is 1, the merge candidate is determined without decoding the index information,
   wherein the magnitude of the offset vector is obtained by applying a shift operation by a preset value to the value indicated by the motion magnitude value specified by first index information,
   wherein the direction of the offset vector is determined based on second index information specifying one among vector direction values,
   wherein the range of motion vector offset size values is set differently based on motion vector precision, and
   wherein when the motion vector precision for the current block is a fractional-pel, values of the first index information are set to 1, 2, 4, 8, or 16, and
   when the motion vector precision for the current block is an integer-pel, values of the variable motion magnitude corresponding to respective values of the first index information are set to 4, 8, 16, 32, or 64.

2. A video encoding method comprising the steps of:

determining whether a merge motion difference encoding method is applied to a current block;
generating a merge candidate list for the current block;
specifying a merge candidate for the current block based on the merge candidate list;
deriving a motion vector for the current block based on the merge candidate; and
encoding a flag indicating numerical values of motion magnitude candidates, , wherein
when the merge motion difference encoding method is applied to the current block, the motion vector of the current block is derived by adding an offset vector to a motion vector of the merge candidate,
when the maximum number of merge candidates that the merge candidate list may include is plural, index information indicating the merge candidate of the current block among the merge candidates is encoded, and
when the maximum number is 1, encoding of the index information is omitted,
wherein the magnitude of the offset vector is obtained by applying a shift operation by a preset value to the value indicated by the motion magnitude value specified by the first index information,
wherein the direction of the offset vector is determined based on second index information specifying one among vector direction values,
wherein the range of motion vector offset size values is set differently based on motion vector precision, and
wherein when the motion vector precision for the current block is a fractional-pel, values of the variable motion magnitude corresponding to respective values of the first index information are set to 1, 2, 4, 8, or 16, and when the motion vector precision for the current block is an integer-pel, values of the variable motion magnitude corresponding to respective values of the first index information are set to 4, 8, 16, 32, or 64.

3. A video decoding apparatus comprising an inter prediction part (230) for determining whether a merge motion difference encoding method is applied to a current block, generating a merge candidate list for the current block, specifying a merge candidate for the current block based on the merge candidate list, and deriving a motion vector for the current block based on the merge candidate, wherein

when the merge motion difference encoding method is applied to the current block, the motion vector of the current block is derived by adding an offset vector to a motion vector of the merge candidate, when the maximum number of merge candidates that the merge candidate list may include is plural, the merge candidate of the current block is selected based on index information decoded from a bitstream indicating one among the merge candidates, and
when the maximum number is 1, the merge candidate is determined without decoding the index information,
wherein the magnitude of the offset vector is obtained by applying a shift operation by a preset value to the value indicated by the motion magnitude value specified the first index information,
wherein the direction of the offset vector is determined based on second index information specifying one among vector direction values,
wherein the range of motion vector offset size values is set differently based on motion vector precision, and
wherein when the motion vector precision for the current block is a fractional-pel, values of the variable motion magnitude corresponding to respective values of the first index information are set to 1, 2, 4, 8, or 16, and when the motion vector precision for the current block is an integer-pel, values of the variable motion magnitude corresponding to respective values of the first index information are set to 4, 8, 16, 32, or 64.

4. A video encoding apparatus comprising an inter prediction part (120) for determining whether a merge motion difference coding method is applied to a current block, generating a merge candidate list for the current block, specifying a merge candidate for the current block based on the merge candidate list, deriving a motion vector for the current block based on the merge candidate, and encoding a flag indicating numerical values of motion magnitude candidates, wherein

when the merge motion difference coding method if applied to the current block, the motion vector of the current block is derived by adding an offset vector to a motion vector of the merge candidate, when the maximum number of merge candidates that the merge candidate list may include is plural, index information indicating the merge candidate of the current block among the merge candidates is encoded, and when the maximum number is 1, encoding of the index information is omitted,
wherein the magnitude of the offset vector is obtained by applying a shift operation by a preset value to the value indicated by the motion magnitude value specified by first index information,
wherein the direction of the offset vector is determined based on second index information specifying one among vector direction values,
wherein the range of motion vector offset size values is set differently based on motion vector precision, and
wherein when the motion vector precision for the current block is a fractional-pel, values of the variable motion magnitude corresponding to respective values of the first index information are set to 1, 2, 4, 8, or 16, and when the motion vector precision for the current block is an integer-pel, values of the variable motion magnitude corresponding to respective values of the first index information are set to 4, 8, 16, 32, or 64.

5. A computer-readable storage medium comprising instructions which, when executed by at least one processor, cause the at least one processor to perform the method of any of claims 1 to 2.

**Patentansprüche**

1. Videodecodierungsverfahren, die folgenden Schritte umfassend:

Bestimmen, ob ein Mischbewegungsdifferenz-Codierungsverfahren auf einen gegenwärtigen Block angewandt wird;
Erzeugen einer Mischkandidaten-Liste für den gegenwärtigen Block;
Spezifizieren eines Mischkandidaten für den gegenwärtigen Block basierend auf der Mischkandidaten-Liste; und
Ableiten eines Bewegungsvektors für den gegenwärtigen Block basierend auf dem Mischkandidaten, wobei
wenn das Mischbewegungsdifferenz-Codierungsverfahren auf den gegenwärtigen Block angewandt wird, der Bewegungsvektor des gegenwärtigen Blocks durch Addieren eines Versatzvektors zu einem Bewegungsvektor des Mischkandidaten abgeleitet wird,
wenn die maximale Anzahl von Mischkandidaten, die die Mischkandidaten-Liste enthalten kann, eine Mehrzahl ist, die Mischkandidaten des gegenwärtigen Blocks basierend auf aus einem Bitstrom decodierten Indexinformationen, die einen unter den Mischkandidaten angeben, ausgewählt werden, und
wenn die maximale Anzahl 1 ist, die Mischkandidaten ohne Decodieren der Indexinformationen bestimmt werden,
wobei die Größe des Versatzvektors durch Anwenden einer Verschiebungsoperation um einen im Voraus eingestellten Wert auf den Wert, der durch den durch erste Indexinformationen spezifizierten Bewegungsgrößenwert angegeben wird, erlangt wird,
wobei die Richtung des Versatzvektors basierend auf zweiten Indexinformationen bestimmt wird, die einen unter Vektorrichtungswerten spezifizieren,
wobei der Bereich von Bewegungsvektor-Versatzgrößenwerten basierend auf einer Bewegungsvektorgenauigkeit unterschiedlich eingestellt wird und
wobei, wenn die Bewegungsvektorgenauigkeit für den gegenwärtigen Block ein gebrochener Bildpunkt ist, Werte der ersten Indexinformationen auf 1, 2, 4, 8 oder 16 eingestellt werden, und
wenn die Bewegungsvektorgenauigkeit für den gegenwärtigen Block ein ganzzahliger Bildpunkt ist, Werte der variablen Bewegungsgröße korrespondierend mit jeweiligen Werten der ersten Indexinformationen auf 4, 8, 16, 32 oder 64 eingestellt werden.

2. Videocodierungsverfahren, die folgenden Schritte umfassend:

Bestimmen, ob ein Mischbewegungsdifferenz-Codierungsverfahren auf einen gegenwärtigen Block angewandt wird;
Erzeugen einer Mischkandidaten-Liste für den gegenwärtigen Block;
Spezifizieren eines Mischkandidaten für den gegenwärtigen Block basierend auf der Mischkandidaten-Liste;
Ableiten eines Bewegungsvektors für den gegenwärtigen Block basierend auf dem Mischkandidaten; und
Codieren einer Markierung, die numerische Werte von Bewegungsgrößenkandidaten angibt, wobei
wenn das Mischbewegungsdifferenz-Codierungsverfahren auf den gegenwärtigen Block angewandt wird, der Bewegungsvektor des gegenwärtigen Blocks durch Addieren eines Versatzvektors zu einem Bewegungsvektor des Mischkandidaten abgeleitet wird,
wenn die maximale Anzahl von Mischkandidaten, die die Mischkandidaten-Liste enthalten kann, eine Mehrzahl ist, Indexinformationen, die den Mischkandidaten des gegenwärtigen Blocks unter den Mischkandidaten angeben, codiert werden, und
wenn die maximale Anzahl 1 ist, Codieren der Indexinformationen weggelassen wird,
wobei die Größe des Versatzvektors durch Anwenden einer Verschiebungsoperation um einen im Voraus eingestellten Wert auf den Wert, der durch den durch die ersten Indexinformationen spezifizierten Bewegungsgrößenwert angegeben wird, erlangt wird,
wobei die Richtung des Versatzvektors basierend auf zweiten Indexinformationen bestimmt wird, die einen unter Vektorrichtungswerten spezifizieren,

wobei der Bereich von Bewegungsvektor-Versatzgrößenwerten basierend auf Bewegungsvektorgenauigkeit unterschiedlich eingestellt wird und

wobei, wenn die Bewegungsvektorgenauigkeit für den gegenwärtigen Block ein gebrochener Bildpunkt ist, Werte der variablen Bewegungsgröße korrespondierend mit jeweiligen Werten der ersten Indexinformationen auf 1, 2, 4, 8 oder 16 eingestellt werden, und

wenn die Bewegungsvektorgenauigkeit für den gegenwärtigen Block ein ganzzahliger Bildpunkt ist, Werte der variablen Bewegungsgröße korrespondierend mit jeweiligen Werten der ersten Indexinformationen auf 4, 8, 16, 32 oder 64 eingestellt werden.

3. Videodecodierungsvorrichtung, umfassend einen Zwischenvorhersageteil (230) zum Bestimmen, ob ein Mischbewegungsdifferenz-Codierungsverfahren auf einen gegenwärtigen Block angewandt wird, Erzeugen einer Mischkandidaten-Liste für den gegenwärtigen Block, Spezifizieren eines Mischkandidaten für den gegenwärtigen Block basierend auf der Mischkandidaten-Liste und Ableiten eines Bewegungsvektors für den gegenwärtigen Block basierend auf dem Mischkandidaten, wobei

wenn das Mischbewegungsdifferenz-Codierungsverfahren auf den gegenwärtigen Block angewandt wird, der Bewegungsvektor des gegenwärtigen Blocks durch Addieren eines Versatzvektors zu einem Bewegungsvektor des Mischkandidaten abgeleitet wird, wenn die maximale Anzahl von Mischkandidaten, die die Mischkandidaten-Liste enthalten kann, eine Mehrzahl ist, die Mischkandidaten des gegenwärtigen Blocks basierend auf aus einem Bitstrom decodierten Indexinformationen, die einen unter den Mischkandidaten angeben, ausgewählt werden und

wenn die maximale Anzahl 1 ist, die Mischkandidaten ohne Decodieren der Indexinformationen bestimmt werden,

wobei die Größe des Versatzvektors durch Anwenden einer Verschiebungsoperation um einen im Voraus eingestellten Wert auf den Wert, der durch den durch die ersten Indexinformationen spezifizierten Bewegungsgrößenwert angegeben wird, erlangt wird,

wobei die Richtung des Versatzvektors basierend auf zweiten Indexinformationen bestimmt wird, die einen unter Vektorrichtungswerten spezifizieren,

wobei der Bereich von Bewegungsvektor-Versatzgrößenwerten basierend auf einer Bewegungsvektorgenauigkeit unterschiedlich eingestellt wird und

wobei, wenn die Bewegungsvektorgenauigkeit für den gegenwärtigen Block ein gebrochener Bildpunkt ist, Werte der variablen Bewegungsgröße korrespondierend mit jeweiligen Werten der ersten Indexinformationen auf 1, 2, 4, 8 oder 16 eingestellt werden, und

wenn die Bewegungsvektorgenauigkeit für den gegenwärtigen Block ein ganzzahliger Bildpunkt ist, Werte der variablen Bewegungsgröße korrespondierend mit jeweiligen Werten der ersten Indexinformationen auf 4, 8, 16, 32 oder 64 eingestellt werden.

4. Videocodierungsvorrichtung, umfassend einen Zwischenvorhersageteil (120) zum Bestimmen, ob ein Mischbewegungsdifferenz-Codierungsverfahren auf einen gegenwärtigen Block angewandt wird, Erzeugen einer Mischkandidaten-Liste für den gegenwärtigen Block, Spezifizieren eines Mischkandidaten für den gegenwärtigen Block basierend auf der Mischkandidaten-Liste, Ableiten eines Bewegungsvektors für den gegenwärtigen Block basierend auf dem Mischkandidaten und Codieren einer Markierung, die numerische Werte von Bewegungsgrößenkandidaten angibt, wobei

wenn das Mischbewegungsdifferenz-Codierungsverfahren auf den gegenwärtigen Block angewandt wird, der Bewegungsvektor des gegenwärtigen Blocks durch Addieren eines Versatzvektors zu einem Bewegungsvektor des Mischkandidaten abgeleitet wird, wenn die maximale Anzahl von Mischkandidaten, die die Mischkandidaten-Liste enthalten kann, eine Mehrzahl ist, Indexinformationen, die den Mischkandidaten des gegenwärtigen Blocks unter den Mischkandidaten angeben, codiert werden, und wenn die maximale Anzahl 1 ist, Codieren der Indexinformationen weggelassen wird,

wobei die Größe des Versatzvektors durch Anwenden einer Verschiebungsoperation um einen im Voraus eingestellten Wert auf den Wert, der durch den durch erste Indexinformationen spezifizierten Bewegungsgrößenwert angegeben wird, erlangt wird,

wobei die Richtung des Versatzvektors basierend auf zweiten Indexinformationen bestimmt wird, die einen unter Vektorrichtungswerten spezifizieren,

wobei der Bereich von Bewegungsvektor-Versatzgrößenwerten basierend auf einer Bewegungsvektorgenauigkeit unterschiedlich eingestellt wird und

wobei, wenn die Bewegungsvektorgenauigkeit für den gegenwärtigen Block ein gebrochener Bildpunkt ist, Werte der variablen Bewegungsgröße korrespondierend mit jeweiligen Werten der ersten Indexinformationen auf 1, 2, 4, 8 oder 16 eingestellt werden, und

wenn die Bewegungsvektorgenauigkeit für den gegenwärtigen Block ein ganzzahliger Bildpunkt ist, Werte der variablen Bewegungsgröße korrespondierend mit jeweiligen Werten der ersten Indexinformationen auf 4, 8, 16, 32 oder 64 eingestellt werden.

**5.** Computerlesbares Speichermedium, umfassend Anweisungen, die, wenn sie durch mindestens einen Prozessor ausgeführt werden, den mindestens einen Prozessor veranlassen, das Verfahren nach einem der Ansprüche 1 bis 2 durchzuführen.

**Revendications**

**1.** Procédé de décodage vidéo, comprenant les étapes de :

la détermination du fait qu'un procédé de codage à différence de mouvement par fusionnement est ou non appliqué sur un bloc actuel ;

la génération d'une liste de candidats de fusionnement pour le bloc actuel ;

la spécification d'un candidat de fusionnement pour le bloc actuel, sur la base de la liste de candidats de fusionnement ; et

la déduction d'un vecteur de mouvement pour le bloc actuel, sur la base du candidat de fusionnement, dans lequel lorsque le procédé de codage à différence de mouvement par fusionnement est appliqué sur le bloc actuel, le vecteur de mouvement du bloc actuel est déduit en additionnant un vecteur de décalage à un vecteur de mouvement du candidat de fusionnement,

lorsque le nombre maximum de candidats de fusionnement que la liste de candidats de fusionnement peut inclure est une pluralité, le candidat de fusionnement du bloc actuel est sélectionné sur la base d'informations d'indice décodées d'un train de bits indiquant un parmi les candidats de fusionnement, et

lorsque le nombre maximum est 1, le candidat de fusionnement est déterminé sans décoder les informations d'indice,

dans lequel l'amplitude du vecteur de décalage est obtenue en appliquant une opération de changement, selon une valeur préréglée, sur la valeur indiquée par la valeur d'amplitude de mouvement spécifiée par des premières informations d'indice,

dans lequel la direction du vecteur de décalage est déterminée sur la base de secondes informations d'indice spécifiant une parmi des valeurs de direction de vecteur,

dans lequel la plage de valeurs de taille de décalage de vecteur de mouvement est réglée différemment sur la base d'une précision de vecteur de mouvement, et

dans lequel, lorsque la précision de vecteur de mouvement pour le bloc actuel est un élément d'image fractionnel, des valeurs des premières informations d'indice sont réglées à 1, 2, 4, 8, ou 16, et

lorsque la précision de vecteur de mouvement pour le bloc actuel est un élément d'image entier, des valeurs de l'amplitude de mouvement variable correspondant à des valeurs respectives des premières informations d'indice sont réglées à 4, 8, 16, 32, ou 64.

**2.** Procédé de codage vidéo, comprenant les étapes de :

la détermination du fait qu'un procédé de codage à différence de mouvement par fusionnement est ou non appliqué sur un bloc actuel ;

la génération d'une liste de candidats de fusionnement pour le bloc actuel ;

la spécification d'un candidat de fusionnement pour le bloc actuel, sur la base de la liste de candidats de fusionnement ;

la déduction d'un vecteur de mouvement pour le bloc actuel, sur la base du candidat de fusionnement ; et

le codage d'un drapeau indiquant des valeurs numériques de candidats d'amplitude de mouvement, dans lequel lorsque le procédé de codage à différence de mouvement par fusionnement est appliqué sur le bloc actuel, le vecteur de mouvement du bloc actuel est déduit en additionnant un vecteur de décalage à un vecteur de mouvement du candidat de fusionnement,

lorsque le nombre maximum de candidats de fusionnement que la liste de candidats de fusionnement peut inclure est une pluralité, des informations d'indice indiquant le candidat de fusionnement du bloc actuel parmi les candidats de fusionnement sont codées, et

lorsque le nombre maximum est 1, le codage des informations d'indice est omis,

dans lequel l'amplitude du vecteur de décalage est obtenue en appliquant une opération de changement, selon une valeur préréglée, sur la valeur indiquée par la valeur d'amplitude de mouvement spécifiée par les premières informations d'indice,

dans lequel la direction du vecteur de décalage est déterminée sur la base de secondes informations d'indice spécifiant une parmi des valeurs de direction de vecteur,

dans lequel la plage de valeurs de taille de décalage de vecteur de mouvement est réglée différemment sur la base d'une précision de vecteur de mouvement, et

dans lequel, lorsque la précision de vecteur de mouvement pour le bloc actuel est un élément d'image fractionnel, des valeurs de l'amplitude de mouvement variable correspondant à des valeurs respectives des premières informations d'indice sont réglées à 1, 2, 4, 8, ou 16, et

lorsque la précision de vecteur de mouvement pour le bloc actuel est un élément d'image entier, des valeurs de l'amplitude de mouvement variable correspondant à des valeurs respectives des premières informations d'indice sont réglées à 4, 8, 16, 32, ou 64.

3. Appareil de décodage vidéo, comprenant une partie d'inter-prédiction (230) destinée à déterminer le fait qu'un procédé de codage à différence de mouvement par fusionnement est ou non appliqué sur un bloc actuel, générer une liste de candidats de fusionnement pour le bloc actuel, spécifier un candidat de fusionnement pour le bloc actuel sur la base de la liste de candidats de fusionnement, et déduire un vecteur de mouvement pour le bloc actuel sur la base du candidat de fusionnement, dans lequel

lorsque le procédé de codage à différence de mouvement par fusionnement est appliqué sur le bloc actuel, le vecteur de mouvement du bloc actuel est déduit en additionnant un vecteur de décalage à un vecteur de mouvement du candidat de fusionnement, lorsque le nombre maximum de candidats de fusionnement que la liste de candidats de fusionnement peut inclure est une pluralité, le candidat de fusionnement du bloc actuel est sélectionné sur la base d'informations d'indice décodées d'un train de bits indiquant un parmi les candidats de fusionnement, et

lorsque le nombre maximum est 1, le candidat de fusionnement est déterminé sans décoder les informations d'indice,

dans lequel l'amplitude du vecteur de décalage est obtenue en appliquant une opération de changement, selon une valeur préréglée, sur la valeur indiquée par la valeur d'amplitude de mouvement spécifiée par les premières informations d'indice,

dans lequel la direction du vecteur de décalage est déterminée sur la base de secondes informations d'indice spécifiant une parmi des valeurs de direction de vecteur,

dans lequel la plage de valeurs de taille de décalage de vecteur de mouvement est réglée différemment sur la base d'une précision de vecteur de mouvement, et

dans lequel, lorsque la précision de vecteur de mouvement pour le bloc actuel est un élément d'image fractionnel, des valeurs de l'amplitude de mouvement variable correspondant à des valeurs respectives des premières informations d'indice sont réglées à 1, 2, 4, 8, ou 16, et

lorsque la précision de vecteur de mouvement pour le bloc actuel est un élément d'image entier, des valeurs de l'amplitude de mouvement variable correspondant à des valeurs respectives des premières informations d'indice sont réglées à 4, 8, 16, 32, ou 64.

4. Appareil de codage vidéo, comprenant une partie d'inter-prédiction (120) destinée à déterminer le fait qu'un procédé de codage à différence de mouvement par fusionnement est ou non appliqué sur un bloc actuel, générer une liste de candidats de fusionnement pour le bloc actuel, spécifier un candidat de fusionnement pour le bloc actuel sur la base de la liste de candidats de fusionnement, déduire un vecteur de mouvement pour le bloc actuel sur la base du candidat de fusionnement, et coder un drapeau indiquant des valeurs numériques de candidats d'amplitude de mouvement, dans lequel

lorsque le procédé de codage à différence de mouvement par fusionnement est appliqué sur le bloc actuel, le vecteur de mouvement du bloc actuel est déduit en additionnant un vecteur de décalage à un vecteur de mouvement du candidat de fusionnement, lorsque le nombre maximum de candidats de fusionnement que la liste de candidats de fusionnement peut inclure est une pluralité, des informations d'indice indiquant le candidat de fusionnement du bloc actuel parmi les candidats de fusionnement sont codées, et, lorsque le nombre maximum est 1, le codage des informations d'indice est omis,

dans lequel l'amplitude du vecteur de décalage est obtenue en appliquant une opération de changement, selon une valeur préréglée, sur la valeur indiquée par la valeur d'amplitude de mouvement spécifiée par des premières informations d'indice,

dans lequel la direction du vecteur de décalage est déterminée sur la base de secondes informations d'indice spécifiant une parmi des valeurs de direction de vecteur,

dans lequel la plage de valeurs de taille de décalage de vecteur de mouvement est réglée différemment sur la base d'une précision de vecteur de mouvement, et

dans lequel, lorsque la précision de vecteur de mouvement pour le bloc actuel est un élément d'image fractionnel, des valeurs de l'amplitude de mouvement variable correspondant à des valeurs respectives des premières informations d'indice sont réglées à 1, 2, 4, 8, ou 16, et

lorsque la précision de vecteur de mouvement pour le bloc actuel est un élément d'image entier, des valeurs de l'amplitude de mouvement variable correspondant à des valeurs respectives des premières informations d'indice sont réglées à 4, 8, 16, 32, ou 64.

5. Support de stockage lisible par ordinateur, comprenant des instructions qui, lorsqu'elles sont exécutées par au moins un processeur, font en sorte que l'au moins un processeur réalise le procédé de l'une quelconque des revendications 1 et 2.

*Fig. 1*

*Fig. 2*

Fig. 3

SPLIT_TT_HOR

SPLIT_TT_VER

SPLIT_BT_HOR

SPLIT_BT_VER

SPLIT_QT

*Fig. 4*

*Fig. 5*

*Fig. 6*

(a)

(b)

Fig. 7

(a)

(b)

Fig. 8

Fig. 9

Rotation    Zoom-in

Zoom-out    Affine transform

*Fig. 10*

Determine affine motion model —S1101

Derive affine seed vector —S1102

Derive affine vector for each subblock —S1103

Predict motion compensation —S1104

*Fig. 11*

$sv_1=(sv_{1x},sv_{1y})$

$sv_0=(sv_{0x},sv_{0y})$

$sv_1=(sv_{1x},sv_{1y})$

$sv_0=(sv_{0x},sv_{0y})$

CU

$sv_2=(sv_{2x},sv_{2y})$

CU

(a)

(b)

*Fig. 12*

$sv_1=(sv_{1x},sv_{1y})$

$sv_0=(sv_{0x},sv_{0y})$

$(x_0,y_0)$

$(x_1,y_1)$

$(x,y)$

*Fig. 13*

*Fig. 14*

*Fig. 15*

Fig. 16

*Fig. 17*

Fig. 18

*Fig. 19*

Performed inter prediction
for current block — S2001

Derive inter-region merge
candidate — S2002

S2003

Is there
previously stored inter-
region merge
candidate? — No → Add inter-region merge candidate
to inter-region motion information list — S2004

Yes

S2005

Is there
previously stored inter-
region merge candidate the same
as inter-region merge
candidate? — No →

S2006

Is the number
of previously stored inter-
region merge candidates equal to
or smaller than maximum
value? — No → Delete oldest inter-
region merge candidate — S2007

Yes

S2008

Do not add inter-region merge
candidate to inter-region motion
information list — S2009

Add inter-region merge candidate to
inter-region motion information list

*Fig. 20*

Inter-region motion
information list
HmvpCandList
(before update)

| HmvpCand [0] | HmvpCand [1] | HmvpCand [2] | HmvpCand [3] | ... | HmvpCand [m] | ... | HmvpCand [n] |

Update

Inter-region motion
information list
HmvpCandList
(after update)

| HmvpCand [1] | HmvpCand [2] | HmvpCand [3] | ... | HmvpCand [m] | ... | HmvpCand [n] | HmvpCand [n+1] |

Indexes of inter-region merge candidates    0    1    2    3    m    n

*Fig. 21*

mvCand = HmvpCand[2]

Inter-region motion
information list
HmvpCandList
(before update)

| HmvpCand [0] | HmvpCand [1] | HmvpCand [2] | HmvpCand [3] | · · · | HmvpCand [m] | · · · | HmvpCand [n] |

Update

Inter-region motion
information list
HmvpCandList
(after update)

| HmvpCand [1] | HmvpCand [2] | HmvpCand [3] | · · · | HmvpCand [m] | · · · | HmvpCand [n] | mvCand |

Indexes of inter-region
merge candidates

0    1    2    3    m    n

*Fig. 22*

Representative subblock

Representative subblock

(a)

(b)

*Fig. 23*

*Fig. 24*

Inter-region
motion
information list
(HmvpCandList)

| HmvpCand [0] | HmvpCand [1] | HmvpCand [2] | ... | HmvpCand [n] |
|---|---|---|---|---|

Indexes of inter-region decoding region merge candidates

0    1    2    3    n

| HmvpLTC and[0] | HmvpLTC and[1] |
|---|---|

Long-term motion
information list
(HmvpLTCandList)

Merge candidate list

| mergeCan dList[0] | mergeCan dList[1] | ... | mergeCan dList[m] | HmvpCand [1] | HmvpCand [2] | HmvpLTC and[0] |
|---|---|---|---|---|---|---|

*Fig. 25*

EP 3 860 123 B1

*Fig. 26*

*Fig. 27*

mergeCandiList[2] having motion the same as that of HmvpCand[j] is not compared.

Distance_idx =1
direction_idx =1

Distance_idx =0
direction_idx =0

Distance_idx =0
direction_idx =3

Initial motion vector

Reference picture

*Fig. 28*

*Fig. 29*

(a)                          (b)

*Fig. 30*

Distance_idx =0
direction_idx =4

Subblock 0 | Subblock 1

Distance_idx =1
direction_idx =5

Distance_idx =0
direction_idx =3

Subblock 2 | Subblock 3

Distance_idx =0
direction_idx =5

*Fig. 31*

(MvLx[0],MvLX[1]+M)

MV of merge_idx of N

(MvLx[0],MvLX[1])

(MvLx[0]-M,MvLX[1])          (MvLx[0]+M,MvLX[1])

(MvLx[0],MvLX[1]-M)

*Fig. 32*

MergeCandList[0]

MergeCandList[1]

MergeCandList[2]

MergeCandList[3]

MergeCandList[4]

MergeCandList[5]

MergeCandList[6]

MrgOffset[0]

MrgOffset[1]

MrgOffset[2]

MrgOffset[3]

MrgOffset[4]

MrgOffset[5]

MrgOffset[6]

MrgOffset[7]

Signal 'MrgOffset_idx'

*Fig. 33*

Fig. 34

MrgOffset[11]   MrgOffset[10]   MrgOffset[9]

MrgOffset[3]   MrgOffset[2]   MrgOffset[1]

MV of merge_idx of N

(MvLX[0],MvLX[1])

MrgOffset[12]   MrgOffset[4]   MrgOffset[0]   MrgOffset[8]

MrgOffset[5]   MrgOffset[6]   MrgOffset[7]

MrgOffset[13]   MrgOffset[14]   MrgOffset[15]

*Fig. 35*

| B2 | | B1 | B0 |
| A1 | | | |
| A0 | | | C1 |

C0

*Fig. 36*

EP 3 860 123 B1

(MvpLx[0],MvpLX[1]+M)

MVP index 0

(MvpLx[0],MvpLX[1])

(MvpLx[0]-M,MvpLX[1])          (MvpLx[0]+M,MvpLX[1])

(MvpLx[0],MvpLX[1]-M)

*Fig. 37*

| AMVPList[0] |
| AMVPList[1] |
| AMVPList[2] |

Signal  'AMVPOffset_idx'

| AMVPOffset[0] |
| AMVPOffset[1] |
| AMVPOffset[2] |
| AMVPOffset[3] |

*Fig. 38*

75

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011194609 A1
- US 2013114717 A1

### Non-patent literature cited in the description

- **XU CHEN et al.** CE4: Enhanced Merge Mode (Test 4.2.15). *Joint Video Experts Team (JVET) of ITU-T SG 16 WP 3 and ISO/IEC JTC 1/SC 29/WG 11 11th Meeting,* 18 July 2018, (JVET-K0198), 1-8
- **LI (TENCENT) G. et al.** CE4-related: affine merge mode with prediction offsets. *12. JVET Meeting; 20181003-20181012; Macao; (The Joint Video Experts Team of ISO/IEC JTC1/SC29/WG11 and ITU-T SG 16 WP 3),* 07 October 2018, (JVET-L0320
- **YANG H. et al.** CE4: Summary report on inter prediction and motion vector coding. *12. JVET Meeting; 20181003-20181012; Macao; (The Joint Video Exploration Team of ISU/IEC JTC1/SC29/WG11 and ITU-T SG.16,* 04 October 2018, (JVET-L0024
- Block merging for quadtree-based video coding. **OUDIN S. et al.** Multimedia and Expo (ICME), 2011 IEEE International Conference on. IEEE, 11 July 2011, 1-6
- **JEONG S. et al.** CE4 Ultimate motion vector expression (Test 4.5.4). *The Joint Video Exploration Team of ISO/IEC JTC1/SC29/WG11 and ITU-T SG.16,* 12 October 2018, (JVET-L0054), 1-8
- **ALSHIN et al.** Description of SDR, HDR and 360° video coding technology proposal by Samsung, Huawei, GoPro, and HiSilicon - mobile application scenario. *10. JVET Meeting; 20180410-20180420; San Diego; (The Joint Video Exploration Team of IS/IEC JTC1/SC29/WG11 and ITU-T SG.16),* 14 April 2018, (JVET-J0024